(19) Europäisches Patentamt
European Patent Office
Office européen des brevets

(11) EP 1 182 179 B2

(12) # NEUE EUROPÄISCHE PATENTSCHRIFT

Nach dem Einspruchsverfahren

(45) Veröffentlichungstag und Bekanntmachung des Hinweises auf die Entscheidung über den Einspruch:
**13.03.2013 Patentblatt 2013/11**

(45) Hinweis auf die Patenterteilung:
**05.08.2009 Patentblatt 2009/32**

(21) Anmeldenummer: **01120018.5**

(22) Anmeldetag: **20.08.2001**

(51) Int Cl.:
***C04B 24/26*** *(2006.01)*

(54) **Verwendung von Ammoniak-freien Polymerdispersionen als Zusatz für Baumaterialien auf Basis hydraulischer Bindemittel**

Use of ammonia-free polymer dispersions as an additive for building materials based on hydraulic binders

Utilisation de dispersions de polymères libre d'ammoniac comme additif pour des materiaux de construction à base de liants hydrauliques

(84) Benannte Vertragsstaaten:
**DE ES FR GB IT**

(30) Priorität: **21.08.2000 DE 10040825**

(43) Veröffentlichungstag der Anmeldung:
**27.02.2002 Patentblatt 2002/09**

(73) Patentinhaber: **BASF SE**
**67056 Ludwigshafen (DE)**

(72) Erfinder:
- **Dreher, Stefan**
  **67433 Neustadt (DE)**
- **Pakusch, Joachim**
  **67346 Speyer (DE)**
- **Reck, Bernd**
  **67269 Grünstadt (DE)**

(74) Vertreter: **Reitstötter - Kinzebach**
**Patentanwälte**
**Postfach 86 06 49**
**81633 München (DE)**

(56) Entgegenhaltungen:
**EP-A- 1 048 676**
**EP-A1- 0 401 200**
**EP-A1- 0 723 975**
**EP-A2- 0 529 695**
**EP-A2- 0 821 016**
**AT-B- 395 245**
**DE-A- 19 840 254**
**DE-A1- 19 705 753**
**GB-A- 1 159 377**
**JP-A- 10 251 313**
**US-A- 3 842 025**

- **DATABASE WPI Section Ch, Week 198907 Derwent Publications Ltd., London, GB; Class A13, AN 1989-050081 XP002254337 & JP 01 005935 A (SHOWA DENKO KK) 10. Januar 1989 (1989-01-10)**
- **F. L. BUCHHOLZ: 'Polyacrylamides and Poly (Acrylic Acids)' ULLMANN'S ENCYCLOPEDIA OF INDUSTRIAL CHEMISTRY 2005, USA, Seiten 1 - 14**
- **'Polyacryl- und Polymethacryl- Verbindungen' ULLMANNS ENCYKLOPÄDIE DER TECHNISCHEN CHEMIE Bd. 4, Nr. 19, 1980, Seiten 7 - 30**
- **KIRK-OTHMER , JOHN WILEY & SONS, INC.: 'Acrylic Ester Polymers' ENCYCLOPEDIA OF CHEMICAL TECHNOLOGY Bd. 1, Nr. 3, 1978, USA, Seiten 394 - 407**

EP 1 182 179 B2

## Beschreibung

Die vorliegende Erfindung betrifft die Verwendung von Ammoniak-freien Polymerdispersionen und von aus den Polymerdispersionen erhältlichen Polymerpulvern oder -granulaten, als Zusatz für mineralische Baumaterialien auf Basis hydraulischer Bindemittel.

Unter hydraulischen Bindemitteln versteht man mineralische Substanzen, die zusammen mit Wasser und gegebenenfalls Zuschlagstoffen und üblichen Hilfsmitteln zu einer im feuchten Zustand plastischen Masse verarbeitet werden, die sich beim Selbstüberlassen an der Luft oder auch unter Wasser, gegebenenfalls unter Einwirkung erhöhter Temperatur, nach einer gewissen Zeit steinartig verfestigt. Beispiele für hydraulischen Bindemittel sind Zement, Gips, Kalk und Ton.

Die Verwendung von Polymerdispersionen oder den aus diesen erhältlichen Polymerpulvern oder -granulaten zur Verbesserung der Eigenschaften von Baumaterialien auf Basis hydraulischer Bindemittel ist grundsätzlich bekannt. Polymerdispersionen für die Verwendung mit hydraulischen Bindemitteln weisen in der Regel einen hohen Anteil an polaren und/oder ionischen Hilfsmonomeren, wie (Meth)acrylsäure und (Meth)acrylamid und einen hohen Gehalt an Emulgatoren auf. Diese Maßnahmen sollen die Stabilität der Dispersionen in Gegenwart der hydraulischen Bindemittel verbessern, da der hohe Elektrolytgehalt der hydraulischen Bindemittel zu einer starken Destabilisierung von dispersen Systemen führt.

Zur Erhöhung der mechanischen Festigkeit von Baumaterialien auf Basis hydraulischer Bindemittel in ausgehärtetem Zustand werden häufig Polymerdispersionen eingesetzt, deren Polymere eine hohe Glasübergangstemperatur ($T_g$) aufweisen. So beschreibt die EP-A-537 411 die Verwendung von Polymerdispersionen mit einer $T_g$ > +30 °C als Zusatz zu Zement. Der Zusatz soll die Festigkeit zementgebundener Massen verbessern und die offene Zeit verlängern.

Die JP-59 146 963 beschreibt ebenfalls Polymerdispersionen mit hoher Glasübergangstemperatur für dieses Anwendungsgebiet. Diese enthalten mehr als 90 % eines "harten Monomers", wie Styrol, Methylmethacrylat, Acrylnitril oder Vinylchlorid, und lediglich 0,02 bis 10 % eines hydrophilen Comonomers, wie Acrylamid, Natriumstyrolsulfonat, Hydroxyethylmethylacrylat oder Natriumvinylsulfonat. Die Verwendung dieser Dispersionen als Zusatz zu Zement führt zu zementösen Baumaterialien mit einer erhöhten Wasserfestigkeit sowie teilweise verbesserter Druckfestigkeit.

Baumaterialien auf Basis hydraulischer Bindemittel, die derartige Polymerdispersionen enthalten, sind vergleichsweise spröde und zeigen insbesondere eine geringe Tieftemperaturflexibilität. Dies ist vermutlich darauf zurückzuführen, dass aufgrund der hohen Tg des Polymers keine Verfilmung der Latexteilchen in den Baumaterialien stattfindet.

Zur Verringerung der Sprödigkeit und zur Erhöhung der Tieftemperaturflexibilität ausgehärteter Baumaterialien auf Basis hydrauwischer Bindemittel werden daher Polymerdispersionen eingesetzt, die Polymere mit niedriger $T_g$ enthalten. So beschreibt die AT-359 904 die Verwendung von Polymerdispersionen mit einer Tg von -70 bis -8 °C als Zusatz für zementhaltige Baustoffe. Durch Zusatz von 3 bis 35 Gew.-% derartiger Dispersionen sollen Mörtel erhalten werden, die nach Erhärtung eine hohe Tieftemperaturflexibilität besitzen. Jedoch führt der Zusatz dieser Dispersionen zu Baumaterialien mit geringer Festigkeit.

Die JP-63 055 143 und JP-64 5935 beschreiben Polymerdispersionen, die ein Polymer aus 55 bis 90 Gew.-% eines Acrylsäure-$C_4$-$C_8$-alkylesters, 5 bis 40 Gew.-% Acrylnitril und/oder Styrol, 1 bis 10 Gew.-% Acryl- und/oder Methacrylsäure und 1 bis 10 Gew.-% wenigstens eines 2-Hydroxyethyl- oder -propyl(meth)acrylats und/oder (Meth)acrylamid enthalten, das durch Emulsionspolymerisation in Gegenwart eines nichtionischen Emulgators hergestellt wird. Der Einsatz dieser Polymerdispersionen führt zu Baustoffen mit erhöhter Flexibilität und geringerer Neigung zur Rissbildung. Jedoch müssen mehr als 40 Gew.-% Polymerdispersion zugesetzt werden. Die so erhaltenen Baustoffe zeigen eine unbefriedigend hohe Wasseraufnahme und weisen oft einen unangenehmen Geruch auf. Dieser ist vermutlich auf gasförmigen Ammoniak zurückzuführen, der durch partielle Hydrolyse des Polymers entsteht.

Die JP-63 156 048 empfiehlt die Verwendung von Polymerdispersionen, die 2 bis 10 Gew.-% ungesättigte Monomere mit Hydroxylgruppen und 30 bis 98 Gew.-% Acrylsäurealkylester ohne Hydroxylgruppen einpolymerisiert enthalten und die im Wesentlichen frei sind von ungesättigten Carbonsäuren und Carbonsäureamiden. Der Einsatz dieser Dispersionen in zementhaltigen Materialien führt zu gutem Haftungsvermögen und erhöhter Standfestigkeit. Die Elektrolytstabilität dieser Polymerdispersionen und damit ihre Stabilität in zementhaltigen Massen ist jedoch ungenügend. Darüber hinaus führt der Zusatz dieser Dispersionen zu einen unangenehmen Geruch der polymermodifizierten zementhaltigen Massen, der vermutlich auf die Freisetzung des bei der Neutralisation der Dispersionen eingesetzten Ammoniaks zurückzuführen ist.

Die JP 01005935 beschreibt elastische Mörtelzusammensetzungen, die Portland-Zement, Schnellzement, Gummipulver und eine wässrige synthetische Polymeremulsion enthalten. Bei der Emulsion handelt es sich vorzugsweise um die eines Acrylatpolymeren, das durch Emulsionpolymerisation einer Monomermischung erhalten wird, die (a) 55-90 Gew.-% $C_{4-8}$-Alkylacrylate, (b) 5-40 Gew.-% Styrol und/oder Acrylnitril, (c) 1 bis 10 Gew.-% Acrylsäure und/oder Methacrylsäure, und (d) wenigstens ein unter 2-Hydroxyethylacrylat, 2-Hydroxyethylmethacrylat, 2-Hydroxypropylacrylat, 2-Hydroxypropylmethacrylat, Acrylamid und Methacrylamid ausgewählten Monomeren einpolymerisiert enthält.

Der vorliegenden Erfindung lag daher die Aufgabe zugrunde, wässrige Polymerdispersionen bereitzustellen, die eine hohe Scher-und Elektrolytstabilität aufweisen und beim Zusatz zu Baumaterialien auf Basis hydraulischer Bindemittel zu verbesserten mechanischen Eigenschaften der Baumaterialien in ausgehärtetem Zustand führen. Insbesondere sollen die Dispersionen zu Baumaterialien führen, die eine gute Verarbeitbarkeit sowie gleichzeitig eine hohe Flexibilität, insbesondere bei tiefen Temperaturen, und Festigkeit aufweisen. Das Polymer soll sich in Gegenwart der hydraulischen Bindemittel geruchsneutral verhalten.

Gelöst wird die Aufgabe durch wässrige, Ammoniak-freie Polymerdispersionen, die wenigstens ein Copolymerisat enthalten, das als Monomere

a) 40 bis 80 Gew.-% wenigstens eines Esters der Acrylsäure mit $C_2$-$C_{12}$-Alkanolen,

b) 10 bis 40 Gew.-% wenigstens eines vinylaromatischen Monomers und/oder wenigstens eines Esters der Methacrylsäure mit $C_1$-$C_4$-Alkanolen,

c) 2 bis 15 Gew.-% wenigstens eines Monoesters eines $C_2$-$C_{10}$-Al-kandiols mit Acrylsäure oder Methacrylsäure,

d) 0,2 bis 0,8 Gew.-% ethylenisch ungesättigte Monomere, die wenigstens eine Säuregruppe aufweisen, oder deren Salze,

e) weniger als 5 Gew.-% ethylenisch ungesättigte Nitrile und

f) weniger als 1 Gew.-% Amide $\alpha,\beta$-ethylenisch ungesättigter Mono-und Dicarbonsäuren

einpolymerisiert enthält.

Demnach betrifft die vorliegende Erfindung die Verwendung der vorstehend definierten, wässrigen Polymerdispersionen als Zusatz für Baumaterialien auf Basis hydraulischer Bindemittel. Das in den erfindungsgemäßen Polymerdispersionen enthaltene Copolymerisat wirkt dabei als filmbildender Bestandteil. Baumaterialien auf Basis hydraulischer Bindemittel im Sinne dieser Erfindung sind sowohl die hydraulischen Bindemittel selbst, als auch Baumaterialien bzw. Baustoffe, die wenigstens 5 Gew.-%, insbesondere 10 Gew.-% und besonders bevorzugt wenigstens 25 Gew.-%, jeweils bezogen auf das Gesamtgewicht aus hydraulischem Bindemittel und Zuschlägen, wenigstens eines hydraulischen Bindemittels enthalten. Bevorzugt ist die Verwendung in Baumaterialien, die Zement als Bindemittel enthalten.

Die Baumaterialien auf Basis hydraulischer Bindemittel werden im Allgemeinen durch Zusatz von Wasser (Anmachwasser) und gegebenenfalls üblichen mineralischen und/oder nichtmineralischen Zuschlägen in eine verarbeitungsfähige Form, meist in Form flüssiger oder plastisch verformbarer Massen, überführt. Diese Massen härten in der Regel beim sich Selbstüberlassen mit der Zeit aus. Typische Baumaterialien auf Basis hydraulischer Bindemittel, die so verarbeitet werden, sind Zement, Mörtel, Putze, Fliesenkleber, mineralische Dichtungsschlämme, Beton und dergleichen. Diese Baumaterialien unterscheiden sich im Wesentlichen durch die Menge und Art der enthaltenen Zuschläge und/oder den Wassergehalt bei der Anwendung am Bau.

Erfindungsgemäß wird den Baumaterialien auf Basis hydraulischer Bindemittel eine Polymerdispersion, wie hierin beschrieben, zugesetzt. Der Zusatz kann z. B. beim Überführen der Baumaterialien in die verarbeitungsfähige Form erfolgen, z. B. durch Ersetzen wenigstens eines Teils des Anmachwassers durch eine wie hier beschriebene Polymerdispersion. Die erfindungsgemäße Verwendung der Polymerdispersion kann auch in Form eines durch Trocknen der Dispersion erhaltenen Pulvers oder Granulats erfolgen. Diese Pulver oder Granulate können den Baumaterialien auf Basis hydraulischer Bindemittel sowohl in trockenem Zustand (d. h. vor der Zugabe von Wasser) als auch bei oder nach der Zugabe von Wasser zugesetzt werden.

Alle Mengenangaben bezüglich der hydraulischen Bindemittel und der Baumaterialien auf Basis hydraulischer Bindemittel beziehen sich, wenn nichts anderes erwähnt ist, auf ihren Feststoffgehalt. Der Feststoffgehalt der hydraulischen Bindemittel und der Baumaterialien auf Basis hydraulischer Bindemittel kann durch 24-stündiges Trocknen bei 120 °C bestimmt werden. Als mineralischer Anteil werden die Trockenfeststoffe der Baumaterialien, d. h. die Gesamtmenge aus hydraulischem Bindemittel und Zuschlägen, ohne organische Stoffe und ohne poröse Stoffe verstanden. In den meisten Fällen kann der mineralische Anteil der Baumaterialien auf Basis hydraulischer Bindemittel durch Glühen einer gegebenenfalls zerkleinerten Probe der Baumaterialien bestimmt werden.

Alle Mengenangaben, die die erfindungsgemäß zu verwendenden Polymerdispersionen und deren Bestandteile, insbesondere das Copolymerisat, den Emulgator sowie gegebenenfalls enthaltene Hilfsstoffe betreffen, sind als Feststoff gerechnet, sofern nichts anderes angegeben ist. Die Feststoffgehalte der Polymerdispersionen und der flüssigen Dispersionsbestandteile, z. B. der meist wässrigen Lösungen der Emulgatoren, können durch Trocknen bei 120 °C bis zur Gewichtskonstanz bestimmt werden.

Vorzugsweise liegt das in Wasser dispergierte Copolymerisat als Polymerteilchen mit mittleren Teilchengrößen

im Bereich von 50 bis 1 000 nm, insbesondere 50 bis 500 nm, besonders bevorzugt 60 bis 300 nm, vor. Das Copolymerisat enthält ethylenisch ungesättigte Monomere einpolymerisiert. Die Mengenangaben der einpolymerisierten Monomere ergeben in der Summe 100 Gew.-%. Die Einstellung der mittleren Teilchengrößen erfolgt in bekannter Weise, z. B. durch Vorlage eines Saatlatex, durch einen in situ zu Beginn der Polymerisation gebildeten Saatlatex, durch die Emulgatorkonzentration oder einer Kombination dieser Maßnahmen.

Vorzugsweise enthält das Copolymerisat als Monomere 55 bis 80 Gew.-% und besonders bevorzugt 60 bis 76 Gew.-% wenigstens eines Esters der Acrylsäure mit $C_2$-$C_{12}$-Alkanolen einpolymerisiert. Geeignete $C_2$-$C_{12}$-Alkanole sind lineare $C_2$-$C_{12}$-Alkanole, verzweigte $C_3$-$C_{12}$-Alkanole und $C_5$-$C_{10}$-Cycloalkanole. Insbesondere geeignet sind lineare oder verzweigte $C_2$-$C_8$-Alkanole. Beispiele für Monomere a) sind Ethylacrylat, n-Propylacrylat, iso-Propylacrylat, n-Butylacrylat, sek.-Butyl-acrylat, tert.-Butylacrylat, 3-Methylbutylacrylat, 2-Methylbutyl-acrylat, n-Pentylacrylat, n-Hexylacrylat, Cyclohexylacrylat, 2-Ethylhexylacrylat, n-Octylacrylat, n-Decylacrylat, 2-Propylheptylacrylat, iso-Bornylacrylat, Norbornylacrylat, 4-tert.-Butylcyclohexylacrylat und 2,3,5-Trimethylcyclohexylacrylat. Besonders bevorzugt sind Ethylacrylat, n-Butylacrylat und 2-Ethylhexylacrylat und Gemische davon.

Vorzugsweise enthalten die Copolymerisate als Monomere b) 12 bis 35 Gew.-% und besonders bevorzugt 15 bis 30 Gew.-% wenigstens eines einfach ungesättigten vinylaromatischen Monomers und/oder wenigstens eines Methacrylsäureesters von $C_1$-$C_4$-Alkanolen. Geeignete Vinylaromaten sind Styrol, $\alpha$-Methylstyrol, $\alpha$-Phenylstyrol, o-Chlorstyrol, Vinyltoluole und Gemische davon. Besonders bevorzugter Vinylaromat ist Styrol. Geeignete Methacrylsäureester von $C_1$-$C_4$-Alkanolen sind z. B. Methylmethacrylat, Ethylmethacrylat, n-Propylmethacrylat, iso-Propylmethacrylat, n-Butylmethacrylat, sek.-Butylmethacrylat und tert.-Butylmethacrylat, und hierunter bevorzugt Methylmethacrylat. Besonders bevorzugtes Monomer b) ist Styrol.

Die Monomere a) und b) (Hauptmonomere) machen zusammen in der Regel 80 bis 98 Gew.-%, vorzugsweise 85 bis 98 Gew.-% und besonders bevorzugt 90 bis 97 Gew.-% aller einpolymerisierten Monomere aus. Besonders bevorzugte Monomerkombinationen aus Monomeren b) und Monomeren a) sind die Kombinationen Styrol/n-Butylacrylat; Styrol/n-Butylacrylat/2-Ethylhexylacrylat; Styrol/2-Ethylhexylacrylat; Methylmethacrylat/n-Butylacrylat; Methylmethacrylat/n-Butylacrylat/2-Ethylhexylmethacrylat; Methylmethacrylat/2-Ethylhexylacrylat; Styrol/Methylmethacrylat/n-Butylacrylat; Styrol/Methylmethacrylat/n-Butylacrylat/2-Ethylhexylacrylat.

Bevorzugt für die erfindungsgemäße Verwendung sind beispielsweise:

- Copolymerisate, die als Hauptmonomere Styrol und mindestens einen Ester der Acrylsäure, ausgewählt unter n-Butylacrylat, 2-Ethylhexylacrylat und Ethylacrylat enthalten; oder

- Copolymerisate, die als Hauptmonomere Methylmethacrylat und mindestens einen Ester der Acrylsäure, ausgewählt unter n-Butylacrylat und 2-Ethylhexylacrylat, enthalten.

Vorzugsweise enthält das Copolymerisat als Monomere c) 3 bis 12 Gew.-% und besonders bevorzugt 3 bis 9 Gew.-% wenigstens eines Monoesters eines $C_2$-$C_{10}$-Alkandiols mit Acrylsäure oder Methacrylsäure einpolymerisiert. Geeignete Alkandiole sind lineare $C_2$-$C_{10}$-Alkandiole, verzweigte $C_3$-$C_{10}$-Alkandiole und $C_5$-$C_{10}$-Cycloalkandiole, vorzugsweise lineare $C_2$-$C_6$-$\alpha,\omega$-Alkandiole. Beispiele für geeignete Monomere c) sind Hydroxyethylacrylat, Hydroxyethylmethacrylat, 3-Hydroxypropylacrylat, 3-Hydroxypropylmethacrylat, 2-Hydroxypropylacrylat, 2-Hydroxypropylmethacrylat, 4-Hydroxybutylacrylat und 4-Hydroxybutylmethacrylat.

Erfindungsgemäß enthält das Copolymerisat als Monomere d) 0,2 bis 0,8 Gew.-% ethylenisch ungesättigte Monomere, die wenigstens eine Säuregruppe, z. B. eine Carboxylgruppe oder eine Sulfonsäuregruppe aufweisen, oder deren Salze einpolymerisiert. Geeignet als Monomere d) sind a,$\beta$-ethylenisch ungesättigte $C_3$-$C_6$-Monocarbonsäuren, wie Acrylsäure oder Methacrylsäure, und monoethylenisch ungesättigte $C_4$-$C_8$-Dicarbonsäuren, wie Maleinsäure, Fumarsäure, Itaconsäure und Citraconsäure. Geeignete Monomere d) sind weiterhin ethylenisch ungesättigte Monomere, die eine Sulfonsäuregruppe enthalten, wie Vinylsulfonsäure, 2-Acrylamido-2-methylpropansulfonsäure, 2-Acryloxyethansulfonsäure und 2-Methacryloxyethansulfonsäure, deren Salze, vorzugsweise deren Ammoniumsalze, insbesondere Ammoniumsalze von bei Raumtemperatur nicht flüchtigen Aminen, und bevorzugt deren Alkalimetallsalze, insbesondere deren Natriumsalze. Bevorzugt sind Acrylsäure und Methacrylsäure.

Die Copolymerisate enthalten bevorzugt weniger als 4 Gew.-% ethylenisch ungesättigte Nitrile, wie Acrylnitril oder Methacrylnitril. Besonders bevorzugt sind die Copolymerisate im Wesentlichen frei von derartigen Nitrilen oder weisen diese in einer Menge von 0,1 bis höchstens 3,5 Gew.-% auf. Ein geringer Gehalt an einpolymerisierten Nitrilen ist vorteilhaft für eine niedrige Wasseraufnahme der erfindungsgemäße modifizierten Baumaterialien.

Die Copolymerisate enthalten bevorzugt weniger als 0,5 Gew.-% Amide a,$\beta$-ethylenisch ungesättigter Mono- und Dicarbonsäuren. Besonders bevorzugt sind die erfindungsgemäß verwendeten Polymerdispersionen frei oder im Wesentlichen frei von Amiden von Carbonsäuren. Ein möglichst niedriger Gehalt an Amiden $\alpha,\beta$-ethylenisch ungesättigter Carbonsäuren ist vorteilhaft für die geringe Geruchsentwicklung der erfindungsgemäßen Dispersionen in Gegenwart der hydraulischen Bindemittel.

Darüber hinaus können die Copolymerisate geringe Mengen weiterer Monomere enthalten, wie sie üblicherweise bei der Herstellung wässriger Polymerdispersionen eingesetzt werden.

Geeignete weitere Comonomere sind beispielsweise Silizium enthaltende Monomere, insbesondere Silylgruppen enthaltende Monomere, wie Vinyltrialkoxysilane, z. B. Vinyltrimethoxysilan, Alkylvinyldialkoxysilane oder (Meth)acryloxyalkyltrialkoxysilane, z. B. (Meth)acryloxyethyltrimethoxysilan, (Meth)acryloxypropyltrimethoxysilan und Trimethoxysilylpropylmethacrylat, Glycidylgruppen enthaltende Monomere, insbesondere Glycidyl(meth)acrylat, Glycidylvinylether, 1,3-Diketogruppen enthaltende Monomere, insbesondere Acetoxyethyl(meth)acrylat und Diaceton(meth)acrylamid, Harnstoffgruppen enthaltende Monomere wie Ureidoethyl(meth)acrylat, weiterhin Acrylamidoglycolsäure und Methacrylamidoglycolatmethylester. Wenn diese weiteren Comonomere in den erfindungsgemäß zu verwendenden Polymerdispersionen enthalten sind, sind sie in der Regel in Mengen von 0,1 bis 10 Gew.-%, vorzugsweise nicht mehr als 5 Gew.-%, in den Copolymerisaten einpolymerisiert.

Ganz besonders bevorzugt sind Copolymerisate, die

a) 55 bis 80 Gew.-% und insbesondere 60 bis 76 Gew.-% wenigstens eines Monomers a), ausgewählt unter Ethylacrylat, n-Butylacrylat und 2-Ethylhexylacrylat,

b) 12 bis 35 Gew.-%, insbesondere 15 bis 30 Gew.-% Styrol und/oder Methylmethacrylat,

c) 3 bis 12 Gew.-%, insbesondere 3 bis 9 Gew.-%, z. B. etwa 4, etwa 6 oder etwa 8 Gew.-%, wenigstens eines Monoesters eines $C_2$-$C_6$-Alkandiols, bevorzugt $C_2$-$C_4$-Alkandiols, mit Acrylsäure oder Methacrylsäure, bevorzugt mit Acrylsäure, und gegebenenfalls

d) 0,2 bis 0,8 Gew.-% wenigstens einer ethylenisch ungesättigten Carbonsäure, ausgewählt unter Acrylsäure, Methacrylsäure, Maleinsäure und Itaconsäure, bevorzugt unter Acrylsäure und Methacrylsäure,

einpolymerisiert enthalten. Besonders bevorzugt sind die Copolymerisate darüber hinaus frei von primären Amidgruppen und/oder Nitrilgruppen.

In einer bevorzugten Ausführungsform der vorliegenden Erfindung enthält das Copolymerisat ausschließlich Vinylaromaten, insbesondere Styrol, als Monomer b).

Die zur Anwendung kommenden Copolymerisate sind bekannt, im Handel erhältlich oder können nach bekannten Methoden hergestellt werden.

Die Herstellung der Copolymerisate erfolgt in der Regel mittels radikalischer, wässriger Emulsionspolymerisation in Gegenwart wenigstens eines radikalischen Polymerisationsinitiators und gegebenenfalls einer oder mehrerer grenzflächenaktiver Substanzen.

Die wässrige Emulsionspolymerisation kann in üblicher Weise erfolgen, z. B. wie beispielsweise in der "Encyclopedia of Polymer Science and Technology", Vol. 5, Wiley & Sons Inc., NY 1966, S. 847 beschrieben. Auch in Wasser dispergierte Copolymerisate in Form mehrphasiger Teilchen sind brauchbar. Ihre Herstellung kann z. B. durch sequentielle Verfahren, wie z. B. in der EP-555 959, EP-308 753 und EP-654 454 beschrieben, erfolgen.

Die Polymerisation wird in üblicher Weise in Gegenwart von Radikale bildenden Verbindungen (Initiatoren) durchgeführt. Man benötigt von diesen Verbindungen vorzugsweise 0,05 bis 10, besonders bevorzugt 0,2 bis 5 Gew.-%, bezogen auf die bei der Polymerisation eingesetzten Monomeren.

Man kann auch höhermolekulare Copolymerisate verwenden, die in Gegenwart von üblichen Vernetzern polymerisiert worden sind. Geeignete Vernetzer sind dem Fachmann bekannt, z. B. aus der DE 197 29 161.9, auf die hiermit in vollem Umfang Bezug genommen wird.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 10 Gew.-%, vorzugsweise 0,1 bis 7,5 Gew.-% und insbesondere 1 bis 5 Gew.-%, bezogen auf die zu polymerisierenden Monomere eingesetzt.

Geeignete Schutzkolloide sind beispielsweise Polyvinylalkohole, Stärke- und Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420. Auch Gemische aus Emulgatoren und/oder Schutzkolloiden können verwendet werden.

Vorzugsweise wurden bei der Herstellung der Copolymerisate keine Schutzkolloide eingesetzt. Wenn die Polymerdispersionen Schutzkolloide enthalten, werden diese bevorzugt erst nach der Herstellung der Polymerdispersion zugesetzt.

Besonders bevorzugt werden als grenzflächenaktive Substanzen ausschließlich Emulgatoren eingesetzt, deren relative Molekulargewichte im Unterschied zu den Schutzkolloiden üblicherweise unter 2000 liegen. Sie können sowohl anionischer, kationischer als auch nichtionischer Natur sein. Bei den im Rahmen dieser Erfindung eingesetzten Emulgatoren handelt es sich vorzugsweise um nichtionische oder anionische Emulgatoren. Während es sich bei den nichtionischen Emulgatoren in der Regel um nichtionische alkoxylierte Emulgatoren handelt, wird bei den anionischen Emulgatoren im Folgenden zwischen anionischen nicht alkoxylierten Emulgatoren und anionischen alkoxylierten Emulgatoren unterschieden.

Zu den anionischen nicht alkoxylierten Emulgatoren zählen Alkali-und Ammoniumsalze von Alkylsulfaten (Alkylrest: $C_8$-$C_{40}$) z.B. von Schwefelsäurehalbestern, von $C_8$-$C_{22}$-Fettalkoholen oder von $C_8$-$C_{32}$-Oxoalkoholen, von Alkylsulfonsäuren (Alkylrest: $C_{12}$-$C_{18}$) von Sulfobernsteinsäuredi-$C_6$-$C_{25}$-alkylestern und von Alkylarylsulfonsäuren (Alkylrest: $C_6$ bis $C_{32}$) z.B. von $C_6$-$C_{32}$-Alkylphenolen. Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208.

Zu den anionischen nicht alkoxylierten Emulgatoren zählen auch Verbindungen der allgemeinen Formel I,

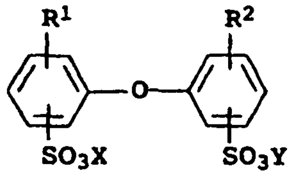

(I)

worin $R^1$ und $R^2$ Wasserstoff oder $C_4$-$C_{24}$-Alkyl bedeuten und nicht gleichzeitig Wasserstoff sind, und X und Y Alkalimetallionen und/oder Ammoniumionen sein können. X und Y sind bevorzugt Natrium, Kalium oder Ammonium, wobei Natrium besonders bevorzugt ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen I sind allgemein bekannt, z. B. aus der US-A-4,269,749, und im Handel erhältlich.

Vorteilhaft für die erfindungsgemäße Verwendung sind Polymerdispersionen, die alkoxylierte Emulgatoren, insbesondere nichtionische alkoxylierte Emulgatoren und/oder anionische alkoxylierte Emulgatoren enthalten. Die alkoxylierten Emulgatoren verbessern sowohl die Handhabungseigenschaften der erfindungsgemäß zu verwendenden Copolymere, wie z. B. die Mischbarkeit und Verarbeitbarkeit von Copolymer und hydraulischem Bindemittel und die Verträglichkeit des Polymers mit dem hydraulischen Bindemittel, als auch die Handhabungseigenschaften und mechanischen Eigenschaften des mit dem Copolymer modifizierten hydraulischen Bindemittels.

Alkoxylierte Emulgatoren sind Emulgatoren, die im hydrophilen Teil Oligoalkylenoxid- oder Polyalkylenoxid-Einheiten aufweisen. Üblicherweise erhält man alkoxylierte Emulgatoren durch Umsetzung von lipophilen Verbindungen oder Verbindungen, die lipophile Gruppen aufweisen, mit Alkylenoxiden, insbesondere Ethylenoxid und/oder Propylenoxid. Solche alkoxylierten Emulgatoren können zusätzlich mit ionischen, insbesondere anionischen Gruppen modifiziert sein. Dementsprechend unterscheidet man zwischen anionischen alkoxylierten Emulgatoren, die wenigstens eine anionische oder eine anionogene Gruppe aufweisen und nichtionischen alkoxylierten Emulgatoren, die keine derartige Gruppe aufweisen.

Beispiele für lipophile Verbindungen oder Verbindungen, die lipophile Gruppen aufweisen, sind aliphatische, aromatische und/oder aromatisch-aliphatische Alkohole, Amide, Amine und Carbonsäuren sowie Derivate davon. Vorzugsweise sind die lipophilen Verbindungen oder Verbindungen, die lipophile Gruppen aufweisen, ausgewählt unter Fettsäuren, Fettalkoholen, Oxoalkoholen, den davon abgeleiteten Aminen, Amiden und Salzen, Phenolen, Alkylphenolen, Hydroxy- oder Aminonaphthalinen, Dicarbonsäuren und deren Estern oder Halbestern und wenigstens eine Hydroxy-Gruppe tragenden lipophilen oder lipophile Abschnitte aufweisenden Polyalkylenoxiden, wie beispielsweise Polypropylenoxid, Polybutylenoxid und statistische Copolymerisate oder Blockcopolymerisate aus Ethylenoxid, Propylenoxid und/oder Butylenoxid.

Der Alkoxylierungsgrad solcher alkoxylierter Emulgatoren liegt in der Regel im Bereich von 2 bis 150, vorzugsweise 3 bis 100 und besonders bevorzugt 4 bis 50.

Beispiele für bevorzugte nichtionische aliphatische alkoxylierte Emulgatoren sind ethoxylierte und ethoxylierte/propoxylierte, bevorzugt ethoxylierte $C_6$-$C_{32}$-Fettalkohole und -Amine, $C_6$-$C_{60}$-Oxoalkohole und -Amine, lineare primäre $C_6$-$C_{60}$-Ziegleralkohole, Fettsäurealkylolamide, Fettsäuren und Fettsäureamide, die einen Alkoxylierungsgrad von 3 bis 100, bevorzugt 4 bis 50, aufweisen sowie Polyalkylenoxidaddukte, wie Ethylenoxid-Propylenoxid-Blockcopolymerisate.

Bevorzugte nichtionische aliphatische alkoxylierte Emulgatoren sind ausgewählt unter ethoxylierten $C_6$-$C_{32}$-Fettalkoholen, bevorzugt $C_8$-$C_{20}$-Fettalkoholen, insbesondere $C_9$-$C_{16}$-Fettalkoholen, z. B. überwiegend wenig verzweigten Fettalkoholen, die durch Reduktion natürlich vorkommender Fettsäuren erhältlich sind, und ethoxylierten $C_6$-$C_{32}$-Oxoalkoholen, bevorzugt $C_8$-$C_{20}$-Oxoalkoholen und insbesondere $C_9$-$C_{16}$-Oxoalkoholen, die im allgemeinen im Vergleich zu den Fettalkoholen stärker verzweigt sind, mit einem mittleren Ethoxylierungsgrad von 2 bis 150, bevorzugt

4 bis 50, insbesondere 6 bis 30, beispielsweise 8 bis 15 oder 12 bis 25. Beispiele für bevorzugte nichtionische aliphatische alkoxylierte Emulgatoren sind ethoxylierter Laurylalkohol mit einem Ethoxylierungsgrad von 4 bis 50, insbesondere 8 bis 25, wie die Lutensolmarken LU-TENSOL® AT18 und AT25 der BASF Aktiengesellschaft.

Beispiele für nichtionische aromatische oder aromatisch-aliphatische alkoxylierte Emulgatoren sind ethoxylierte und ethoxylierte/propoxylierte, bevorzugt ethoxylierte $C_6$-$C_{32}$-Alkylphenole, insbesondere $C_6$-$C_{16}$-Alkylphenole mit einem mittleren Alkoxylierungsgrad im Bereich von 2 bis 150, bevorzugt 3 bis 100 und insbesondere 3 bis 50.

Die anionischen Gruppen anionischer alkoxylierter Emulgatoren sind üblicherweise ausgewählt unter Sulfatgruppen, Sulfonatgruppen, Carboxylatgruppen, Phosphonatgruppen und Phosphatgruppen. Geeignet als Gegenionen der anionischen Gruppen sind Kationen wie beispielsweise Natrium-, Kalium-, Calcium- oder Ammoniumionen sowie Gemische davon. Vorzugsweise ist das Gegenion verschieden von Ammoniumionen leicht flüchtiger Amine, wie Ammoniak, Methylamin oder Ethylamin. Bevorzugtes Gegenion ist das Natriumion. Bevorzugte anionische Gruppen sind die Sulfatgruppe und die Sulfonatgruppe.

Beispiele für anionische alkoxylierte Emulgatoren sind die Schwefelsäure-Halbester und Phosphorsäure-Monoester der obengenannten nichtionischen alkoxylierten Emulgatoren, sowie $C_8$-$C_{32}$-Alkenylpolyethoxysulfonate bzw. -sulfate, $C_8$-$C_{32}$-Alkylglycerylpolyethoxysulfonate, ethoxylierte Sulfobernsteinsäurehalb- und -diester, $C_8$-$C_{32}$-Alkenyl- oder Dialkylpolyethoxyphosphate, ethoxylierte ein-und mehrfach kernsulfonierte Mono- und Dialkylbiphenylether, ethoxylierte $\alpha$-Sulfofettsäureester, ethoxylierte Fettsäurealkanolaminsulfate, sulfonierte oder sulfatierte ethoxylierte Fettsäureester, Fettsäuresarkoside, -glycolate, -lactate, -tauride und -Isothionate, die einen Alkoxylierungsgrad im Bereich von 2 bis 150, vorzugsweise 2 bis 100 und besonders bevorzugt drei bis 50 aufweisen, und deren Salze, insbesondere die Alkalimetall-, z. B. die Natrium- oder Kaliumsalze, oder die Ammoniumsalze, z. B. die Salze mit organischen Aminen, wie Mono-, Di- oder Tri-$C_1$-$C_4$-Alkylaminen oder Mono-, Di- oder Triethanolaminen.

Bevorzugte anionische aliphatische alkoxylierte Emulgatoren sind ausgewählt unter den Schwefelsäure-Halbestern ethoxylierter $C_8$-$C_{20}$-Fettalkohole, insbesondere $C_9$-$C_{16}$-Fettalkohole, z. B. überwiegend wenig verzweigten Fettalkohole, die durch Reduktion natürlich vorkommender Fettsäuren erhältlich sind, und ethoxylierter $C_8$-$C_{32}$-Oxoalkohole, insbesondere $C_9$-$C_{16}$-Oxoalkohole, die im allgemeinen im Vergleich zu den Fettalkoholen stärker verzweigt sind, die einen mittleren Ethoxylierungsgrad von 2 bis 50, insbesondere 2 bis 30, beispielsweise 2 bis 15 oder 9 bis 30 aufweisen.

Bevorzugte anionische aromatische oder anionische aromatisch-aliphatische alkoxylierte Emulgatoren sind ausgewählt unter den Schwefelsäure-Halbestern ethoxylierter und ethoxylierter/propoxylierter, bevorzugt ethoxylierter $C_6$-$C_{32}$-Alkylphenole, insbesondere $C_6$-$C_{16}$-Alkylphenole und besonders bevorzugt Octylphenol und Nonylphenol, die einen mittleren Alkoxylierungsgrad im Bereich von 2 bis 50, insbesondere 2 bis 35, aufweisen.

Gegebenenfalls können die erfindungsgemäßen Zubereitungen auch nicht alkoxylierte Emulgatoren enthalten, jedoch sind in der Regel mindestens 50 Gew.-%, vorzugsweise mindestens 75 Gew.-% der eingesetzten Emulgatoren alkoxylierte Emulgatoren. In einer Ausführungsform sind die erfindungsgemäßen Zubereitungen im Wesentlichen frei von nicht alkoxylierten Emulgatoren. Andere bevorzugte Ausführungsformen betreffen solche Zubereitungen, die wenigstens einen nichtionischen alkoxylierten Emulgator und wenigstens einen anionischen Emulgator ausgewählt unter alkoxylierten und anionischen nicht alkoxylierten Emulgatoren enthalten.

Bevorzugt enthalten die erfindungsgemäß zu verwendenden Polymerdispersionen oder die aus ihnen durch Trocknen, d. h. durch Entfernen von mindestens 80 Gew.-%, vorzugsweise mindestens 85 Gew.-% oder mindestens 90 Gew.-%, der flüchtigen Bestandteile erhältlichen Polymerpulver oder -granulate 0,2 bis 10 Gew.-% und bevorzugt 0,5 bis 5 Gew.-%, bezogen auf den Polymeranteil, wenigstens eines Emulgators.

In einer bevorzugten Ausführungsform der vorliegenden Erfindung wird als alkoxylierter Emulgator wenigstens ein nichtionischer alkoxylierter Emulgator, vorzugsweise ein nichtionischer aliphatischer alkoxylierter Emulgator, eingesetzt.

Vorzugsweise enthalten die erfindungsgemäß zu verwendenden Polymerisate

- ein Gemisch aus wenigstens einem nichtionischen alkoxylierten Emulgator und wenigstens einem anionischen alkoxylierten Emulgator oder
- ein Gemisch aus wenigstens einem nichtionischen alkoxylierten Emulgator, wenigstens einem anionischen alkoxylierten Emulgator und wenigstens einem anionischen nichtalkoxylierten Emulgator oder
- ein Gemisch aus wenigstens einem anionischen, nichtalkoxylierten Emulgator und wenigstens einem nichtionischen alkoxylierten Emulgator.

Polymerdispersionen, die ein solches Gemisch von Emulgatoren enthalten, zeichenen sich durch eine nochmals gesteigerte Stabilität, insbesondere gegen Scherbelastungen, aus.

Wenn die erfindungsgemäß zu verwendenden Copolymerisate ein Gemisch aus wenigstens einem anionischen Emulgator und wenigstens einem nichtionischen alkoxylierten Emulgator enthalten, entfallen in der Regel 15 bis 90 Gew.-%, vorzugsweise 25 bis 80 Gew.-% und bevorzugt 40 bis 70 Gew.-% der Gesamtmenge an enthaltenen Emulgatoren auf anionische Emulgatoren.

Erfindungsgemäß besonders bevorzugte Emulgatorgemische, enthalten wenigstens einen nichtionischen aliphatischen alkoxylierten Emulgator, vorzugsweise einen ethoxylierten $C_8$-$C_{20}$-Fettalkohol, insbesondere $C_9$-$C_{16}$-Fettalkohol, und/oder einen ethoxylierten $C_8$-$C_{32}$-Oxoalkohol, insbesondere $C_9$-$C_{16}$-Oxoalkohol, der einen mittleren Ethoxylierungsgrad von 5 bis 50, insbesondere 6 bis 30 aufweist, und wenigstens einen anionischen aliphatischen alkoxylierten Emulgator, vorzugsweise einen Schwefelsäure-Halbester eines ethoxylierten $C_8$-$C_{20}$-Fettalkohols, insbesondere $C_9$-$C_{16}$-Fettalkohols, und/oder einen Schwefelsäure-Halbester eines ethoxylierten $C_8$-$C_{32}$-Oxoalkohols, insbesondere $C_9$-$C_{16}$-Oxoalkohols, der einen mittleren Ethoxylierungsgrad von 2 bis 50, insbesondere 3 bis 35, aufweist.

Die vorstehend genannten oberflächenaktiven Substanzen, insbesondere die Emulgatoren, können ganz oder teilweise bei der Herstellung der Copolymerisate eingesetzt werden, ganz oder teilweise nach der Herstellung der Copolymerisate zugesetzt werden oder ganz oder teilweise bei der Verwendung zur Herstellung der erfindungsgemäßen Baumaterialien zugesetzt werden. Bei der Herstellung der erfindungsgemäß einzusetzenden Copolymerisate durch radikalische Emulsions-Polymerisation in wässrigen Medien hat es sich als vorteilhaft erwiesen, mindestens 25 Gew.-%, vorzugsweise mindestens 35 Gew.-% und besonders bevorzugt mindestens 50 Gew.-% der Gesamtmenge der Emulgatoren bei der Herstellung der Copolymerisate einzusetzen.

In einigen Ausführungsformen wird die Gesamtmenge an Emulgator im Wesentlichen bei der Herstellung der Copolymerisate eingesetzt. In anderen bevorzugten Ausführungsformen werden 30 bis 65 Gew.-%, bevorzugt 35 bis 60 Gew.-% und besonders bevorzugt 40 bis 55 Gew.-% der Gesamtmenge der eingesetzten, insbesondere der ionischen Emulgatoren, im Verlauf der radikalischen Emulsionspolymerisation zugesetzt. Die Restmenge an Emulgator wird nach Abschluss der Polymerisation zugesetzt (Nachseifen). Für die Herstellung und das "Nachseifen" können die gleichen oder unterschiedliche Emulgatoren eingesetzt werden, wobei beim Einsatz mehrerer Emulgatoren das Mischungsverhältnis der Emulgatoren für die Herstellung der Copolymerisate und für das Nachseifen unterschiedlich sein kann. Insbesondere können beim Nachseifen anionische alkoxylierte Emulgatoren und/oder anionische nichtalkoxylierte Emulgatoren zugesetzt werden.

Um eine hinreichende Verbesserung der mechanischen Festigkeit der Baumaterialien auf Basis hydraulischer Bindemittel zu erreichen, empfiehlt es sich in der Regel, Copolymerisate mit Glasübergangstemperaturen oberhalb von -60 °C, bevorzugt oberhalb von -50 °C, einzusetzen. Daher weisen die Copolymerisate vorzugsweise eine Glasübergangstemperatur $T_g$ von > -45 °C, besonders bevorzugt > -40 °C und insbesondere > -35 °C auf.

Um eine hinreichende Verbesserung der Flexibilität, insbesondere der Tieftemperaturflexibilität der Baumaterialien zu erreichen, sollten die Copolymerisate in den Baumaterialien auf Basis hydraulischer Bindemittel verfilmen können. Daher weisen die erfindungsgemäß zu verwendenden Copolymerisate in der Regel eine Glasübergangstemperatur Tg von < +40 °C, bevorzugt < +30 °C, besonders bevorzugt < +20 °C, ganz besonders bevorzugt < +10 und insbesondere < 0 °C auf.

Geeignete Copolymerisate für die erfindungsgemäße Verwendung weisen daher Glasübergangstemperaturen Tg von etwa -30 °C, etwa -25 °C, etwa -20 °C, etwa -15 °C, etwa -10 °C oder etwa -5 °C auf.

Unter der Glasübergangstemperatur $T_g$ wird hier die gemäß ASTM D 3418-82 durch Differentialthermoanalyse (DTA) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

Bei Polymerdispersionen, bei denen Copolymerisatbestandteile unterschiedlicher Glasübergangstemperatur enthalten sind, ist es in der Regel vorteilhaft, wenn zumindest der Hauptbestandteil eine Glasübergangstemperatur $T_g$ in einem der vorstehend angegebenen Bereiche aufweist. Solche Zubereitungen sind z. B. durch Mischung zweier oder mehrerer unterschiedlicher Copolymerisate oder durch Polymerisationsverfahren zugänglich, die z. B. zu Stufenpolymerisaten, Polymerteilchen mit Kern-Schale-Aufbau oder sonstigen Copolymerisatteilchen mit nicht statistischer Zusammensetzung führen.

Die Einstellung der Glasübergangstemperatur $T_g$ auf einen gewünschten Wert kann sowohl durch Auswahl der entsprechenden Monomere als auch der Mengenverhältnisse der eingesetzten Monomere in dem Copolymerisat oder den Copolymerisaten erfolgen.

In diesem Zusammenhang erweist es sich als hilfreich, die Glasübergangstemperatur $T_g$ des Copolymeren P abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17-18) gilt für die Glasübergangstemperatur von schwach vernetzten Mischpolymerisaten bei großen Molmassen in guter Näherung

$$\frac{1}{T_g} = \frac{X^1}{T_g^1} + \frac{X^2}{T_g^2} + \cdots \frac{X^n}{T_g^n}$$

wobei $X^1$, $X^2$, ..., $X^n$ die Massenbrüche der Monomeren 1, 2, ..., n und $T_g^1$, $T_g^2$, ..., $T_g^n$ die Glasübergangstemperaturen

der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York, 1989 bekannt.

Verfahren zur Einstellung der wie vorstehend beschriebenen Polymerteilchengröße sind beispielsweise aus der EP-A-126 699, der EP-A-567 881, der EP-A-567 819, der DE-A-31 47 008 und der DE-A-42 13 967 bekannt.

Vorzugsweise weisen die erfindungsgemäß verwendeten Polymerdispersionen einen pH-Wert im Bereich von 6,7 bis 8,0, bevorzugt 6,8 bis 7,5 und besonders bevorzugt 6,9 bis 7,2, wie beispielsweise 7,0 oder 7,1, auf. Zum Einstellen des pH-Wertes der Polymerdispersionen werden vorzugsweise nichtflüchtige Basen eingesetzt. Geeignete nichtflüchtige Basen sind beispielsweise Natronlauge, Kalilauge und gelöschter Kalk, der beispielsweise als Feststoff oder als wässrige Lösung (Calciumhydroxidlösung) eingesetzt werden kann. Bevorzugt wird gelöschter Kalk als wässrige Suspension eingesetzt. Das Einhalten des speziellen, wie vorstehend beschrieben pH-Bereichs und die Verwendung der vorgenannten Basen beeinflusst das Anwendungsprofil der erfindungsgemäß zu verwendenden Dispersionen positiv. Insbesondere wird die Verträglichkeit der Polymerdispersionen mit den hydraulischen Bindemitteln günstig beeinflusst.

Die erfindungsgemäß zu verwendenden Polymerdispersionen können direkt, gegebenenfalls nach Einstellen des Feststoffgehaltes und/oder nach Zugabe üblicher Hilfsstoffe (wie nachstehend beschrieben) den Baumaterialien auf Basis von hydraulischen Bindemitteln zugesetzt werden. Wenn wässrige Dispersionen erfindungsgemäß verwendet werden, liegt der Feststoffgehalt der Dispersion, d. h. der Anteil der nichtflüchtigen Bestandteile, in der Regel im Bereich von 20 bis 80 Gew.-%. Vorzugsweise werden die Dispersionen, bezogen auf den Feststoffgehalt, als 30 bis 70 gew.-%ige, insbesondere 35 bis 60 gew.-%ige und besonders bevorzugt 40 bis 55 gew.-%ige wässrige Dispersion eingesetzt.

Die Viskosität der wässrigen Dispersionen liegt in der Regel im Bereich von 10 bis 2500 mPas, vorzugsweise 20 bis 500 mPas, gemessen als 55 gew.-%ige Dispersion in einem Rotationsviskosimeter gemäß DIN 53019 bei 23 °C und einer Schergeschwindigkeit von 250 $s^{-1}$. Die wässrigen Polymerdispersion können organische Lösungsmittel, vorzugsweise mit Wasser mischbare organische Lösungsmittel, wie z. B. Alkohole, Diole und Polyole enthalten. Vorzugsweise liegt der Gehalt an organischen Lösungsmitteln unter 10 Gew.-%, bezogen auf das Gesamtgewicht der Polymerdispersion, besonders bevorzugt sind die Polymerdispersionen im Wesentlichen frei von organischen Lösungsmitteln.

Die erfindungsgemäß zu verwendenden Polymerdispersionen können auch in halbfester Form, z. B. als pastöse Masse, oder in fester Form, z. B. als Pulver oder Granulate, eingesetzt werden. Polymerpulver oder -granulate sind aus den Polymerdispersionen durch Trocknen, vorzugsweise durch Sprühtrocknen, erhältlich.

Gegenstand der vorliegenden Erfindung ist daher auch die Verwendung von Polymerpulvern oder Granulaten, die durch Entfernen von mindestens 80 Gew.-%, vorzugsweise mindestens 90 Gew.-%, der flüchtigen Bestandteile aus den vorstehend beschriebenen Polymerdispersionen erhältlich sind, als Zusatz für mineralische Baumaterialien auf Basis von hydraulischen Bindemitteln.

Die Polymerdispersionen, Polymerpulver oder -granulate können übliche Hilfsmittel enthalten. Die Hilfsmittel werden in der Regel in Mengen von insgesamt 0,1 bis 30 Gew.-%, bezogen auf das Copolymerisat, eingesetzt. Übliche Hilfsmittel sind beispielsweise Netzmittel, Fungizide, Biozide, Entschäumer, wie z. B. die kommerziell erhältlichen Entschäumer der Fa. BASF (Ludwigshafen), der Fa. Münzig (Heilbronn) und der Fa. Wacker (München), Verdikkungsmittel, Gefrierschutzmittel, Verlaufsförderer, Weichmacher und Filmbildehilfsmittel. Geeignete Filmbildehilfsmittel sind beispielsweise Ethylenglycol, Propylenglycol, Butylenglycol, Hexylenglycol, Diethylenglycol, Dipropylenglycol, Dibutylenglycol, deren Halbether mit $C_1$-$C_4$-Alkanolen, z. B. Diethylenglycolmonoethylether, -monobutylether, Propylenglycolmonophenylether, Propylenglycolmonopropylether, -monobutylether, Dipropylenglycolmonopropylether, -monobutylether, deren Ether-Acetate, wie Diethylenglycolmonoethyletheracetat und -monobutyletheracetat, Propylenglycolmonopropyletheracetat und -monobutyletheracetat, Dipropylenglycol-n-butyletheracetat, ferner Alkylester aliphatischer Mono- und Dicarbonsäuren, z. B. Texanol® der Eastman Kodak oder deren technische Gemische davon, z. B. Lusolvan FBH der BASF AG (Di-n-butylestergemische der Bernstein-, Glutar- und Adipinsäure). Als Weichmacher kommen alle üblichen, für Dispersionen geeigneten Weichmacher, beispielsweise (Oligo)propylenglycolalkylphenylether, wie sie z. B. als Plastilit® 3060 der BASF AG im Handel erhältlich sind, in Frage.

Die erfindungsgemäß zu verwendenden Polymerdispersionen, Polymerpulver oder -granulate können zusätzlich einen Verflüssiger für hydraulische Bindemittel enthalten. In der Regel handelt es sich bei Verflüssigern für hydraulische Bindemittel um Additive, die zur Veränderung der Eigenschaften von Baumaterialien auf Basis hydraulischer Bindemittel, insbesondere der Verarbeitungskonsistenz und/oder Abbindeeigenschaften führen. In der Regel handelt es sich bei solchen Verflüssigern für Baumaterialien auf Basis hydraulischer Bindemittel um wasserlösliche makromolekulare Substanzen.

Die gute Verarbeitbarkeit der mit den erfindungsgemäß zu verwendenden Dispersionen modifizierten Baumaterialien auf Basis hydraulischer Bindemittel kann in vielen Fällen durch die Anwesenheit eines Verflüssigers noch weiter verbessert werden.

Vorzugsweise geeignet sind Verflüssiger auf Basis von Naphthalinsulfonsäure-Formaldehyd-Kondensaten, Melamin-Formaldehyd-Polykondensaten und/oder Ligninsulfonaten, wie z. B. in der EP-A-402 319 beschrieben, sowie

auf Basis von Homo- und Copolymeren von Carbonsäuren und Dicarbonsäuren mit Styrol, wie z. B. in der EP-A-306 449 und US-A-3 952 805, oder Isobuten oder Diisobuten, wie in der DE-A-37 16 974, EP-A-338 293, DE-A-39 25 306, US-A-4 586 960, US-A-4 042 407 und US-A-4 906 298, beschrieben.

Ebenfalls geeignet sind Verflüssiger auf Basis von Copolymerisaten aus ungesättigten Carbonsäuren und Hydroxyalkylestern ungesättigter Carbonsäuren, wie z. B. in der EP 97 613 beschrieben, auf Basis einpolymerisierter Carbonsäuremonomere und Polyalkyllenoxidester der Acrylsäure und der Methacrylsäure, wie z. B. in der DE-A-44 20 444 beschrieben, auf Basis von ethylenisch ungesättigten Polyoxyalkylenethern, mehrfach ungesättigten Alkenylethern und Maleinsäureanhydrid, wie beispielsweise in der EP 619 277 beschrieben, oder auf Basis von Copolymeren von Maleinsäurederivaten und Vinylmonomeren, wie beispielsweise in der DE-A-43 04 109 und der EP-A-610 699 beschrieben.

Auf die vorgenannten Publikationen wird hiermit in vollem Umfang Bezug genommen.

Derartige Verflüssiger sind beispielsweise von des Firmen ADDI-MENT (Heidelberg), SKW (Trostberg), BASF (Ludwigshafen), insbesondere die Sokalan-Marken, und DYCKERHOFF (Wiesbaden) kommerziell erhältlich.

Bevorzugt werden Verflüssiger auf Basis von Naphthalinsulfonsäurekondensaten, Copolymerisaten von Carbonsäuremonomeren und Polyalkylenoxidestern der Acrylsäure und der Methacrylsäure eingesetzt.

Die erfindungsgemäß zu verwendenden Copolymerisate, d. h. die Polymerdispersionen, Polymerpulver oder -granulate werden den Baumaterialien auf Basis hydraulischer Bindemittel vorzugsweise in einer Menge von 5 bis 250 Gew.-%, besonders bevorzugt 10 bis 150 Gew.-% und insbesondere 20 bis 100 Gew.-%, gerechnet als Copolymerisat und bezogen auf das Trockengewicht des hydraulischen Bindemittels, zugesetzt. In der Regel ist schon ein Zusatz von 10 bis 50 Gew.-% oder 15 bis 40 Gew.-% Polymer, bezogen auf das hydraulische Bindemittel, ausreichend, um die gewünschte Verbesserung der Eigenschaften von hydraulischen Bindemitteln und Baumaterialien auf Basis hydraulischer Bindemittel zu erreichen.

Die erfindungsgemäß zu verwendenden Polymerdispersionen, Polymerpulver oder -granulate werden den Baumaterialien auf Basis hydraulischer Bindemittel in der Regel in einer Menge von 2 bis 150 Gew.-%, bevorzugt 5 bis 80 Gew.-% und besonders bevorzugt 10 bis 50 Gew.-%, gerechnet als Copolymerisat und bezogen auf das Trockengewicht des mineralischen Anteils der Baumaterialien, zugesetzt. In der Regel ist schon ein Zusatz von 5 bis 35 Gew.-% oder 10 bis 25 Gew.-% Polymer, bezogen auf das Trockengewicht des mineralischen Anteils der Baumaterialien auf Basis hydraulischer Bindemittel, ausreichend, um die gewünschte Verbesserung der Eigenschaften der Baumaterialien zu erreichen.

Übliche Hilfsmittel für Baumaterialien auf Basis hydraulischer Bindemittel sind insbesondere vorstehend beschriebene Hilfsmittel und Verflüssiger. Geeignete weitere Hilfsmittel für den Einsatz in Baumaterialien sind dem Fachmann bekannt und beispielsweise in H. Reul, Handbuch der Bauchemie, Verlag für chemische Industrie H. Ziolkowsky KG, Augsburg (1991), beschrieben.

Als übliche Zuschläge für Baumaterialien auf Basis hydraulischer Bindemittel kommen beispielsweise mineralische Zuschläge wie Kies, Grobsand, Feinsand, Quarzsand unterschiedlicher Korngrößen, z. B. Korngrößen zwischen 0,08 und 0,8 mm, Quarzmehl, z. B. mit Korngrößen $\leq$ 0,09 mm, Basalt, Kalkstein, Kreide, Marmor, Traß, Silikatstaub, gefällte Kieselsäure, Steinkohlenflugasche und Bariumsulfat oder nicht mineralische Zuschläge, z. B. organische Fasern oder organische poröse Substanzen, in Betracht. Weitere geeignete mineralische oder nichtmineralische Zuschläge sind dem Fachmann bekannt und beispielsweise in Sachstandsbericht Dt. Bauchemie: Modifizierte Mineralische Mörtelsysteme und Umwelt (1.Ausgabe, Juli 1998) beschrieben.

Ebenfalls Gegenstand der vorliegenden Erfindung sind Baumaterialien auf Basis hydraulischer Bindemittel, die, bezogen auf das Trockengewicht des mineralischen Anteils, 2 bis 150 Gew.-%, vorzugsweise 5 bis 80 Gew.-% und besonders bevorzugt 5 bis 30 Gew.-% einer wie vorstehend beschriebenen Polymerdispersion, eines daraus erhältlichen Polymerpulvers oder -granulats, gerechnet jeweils als Copolymerisat, enthalten.

Typische Baumaterialien auf Basis hydraulischer Bindemittel, die durch die erfindungsgemäße Verwendung in ihren Eigenschaften verbessert werden können, sind Zement, Flüssigzement, Beton, Mörtel, Putz, Estrichmassen, Bindemittelzubereitungen, insbesondere solche auf Basis von Zement, Straßenbeläge und Fliesenkleber. Bevorzugte Baumaterialien sind insbesondere mineralische Dichtungsschlämme.

Die Baumaterialien können, je nach Anwendungszweck und Verarbeitungsstadium, in fester Form (z. B. vor der Zugabe des Anmachwassers bzw. der Polymerdispersion oder nach dem Aushärten), in flüssiger Form sowie in zähflüssiger oder pastöser Form vorliegen.

Selbstverständlich können die aus den Polymerdispersionen gewonnenen Polymerpulver auch mit dem mineralischen Bindemittel vor Verwendung im Baustoff vermischt werden. Solche Zubereitungen enthalten das hydraulische Bindemittel, vorzugsweise Zement, und das Polymer in der Regel als Hauptbestandteile. Ferner können diese Zubereitungen übliche mineralische oder nichtmineralische Zuschläge und übliche Hilfsmittel, z. B. wie vorstehend beschrieben, enthalten.

Außerdem betrifft die vorliegende Erfindung ein Verfahren zur Verbesserung der mechanischen Festigkeit, Elastizität und Verarbeitbarkeit von Baumaterialien auf Basis hydraulischer Bindemittel, bei dem man hydraulisches

Bindemittel und Polymerdispersion, Polymerpulver oder -granulat und gegebenenfalls Wasser und/oder Zuschläge miteinander vermischt. Geeignete Mischtechniken und Mischvorrichtungen sind dem Fachmann bekannt und z. B. in Ullmanns Enzyklopädie der technischen Chemie, 3. Auflage, 1951, Band 1, S. 693 bis 727 beschrieben.

Die erfindungsgemäße Verwendung der Polymerdispersionen, Polymerpulver oder -granulate führt zu polymermodifizierten Baumaterialien, die sich im Vergleich zu den polymermodifizierten Baumaterialien auf Basis hydraulischer Bindemittel des Standes der Technik dadurch auszeichnet, dass sie bei dem Vermischen von Polymer und hydraulischen Bindemittel und auch danach keinen oder nur einen sehr geringen unangenehmen Geruch entwickeln. Die erfindungsgemäße Verwendung der Polymerdispersionen, Polymerpulver oder -granulate führt darüber hinaus bei einer Vielzahl von Baumaterialien auf Basis mineralischer Bindemittel zu verbesserten Eigenschaften in verfestigtem oder abgebundenem Zustand, insbesondere zu einer erhöhten mechanischen Festigkeit, z. B. einer erhöhten Flexibilität, erhöhten Reißfestigkeit und/oder erhöhten Kohäsion. Die Wasserbeständigkeit der Baumaterialien in verfestigtem oder abgebundenem Zustand wird verbessert und ihre Wasseraufnahme deutlich verringert. In der Regel wird auch die Verarbeitbarkeit der Baumaterialien auf Basis hydraulischer Bindemittel vor dem Verfestigen verbessert, z. B. durch eine günstige sogenannte "offene Zeit" und durch ein geringes Kleben oder Haften an den Werkzeugen beim Anrühren oder Aufschlämmen der hydraulischen Bindemittel zu flüssigen, halbfesten oder pastösen Baumaterialien. Besonders vorteilhaft kommen die Eigenschaften der erfindungsgemäßen Dispersionen, Polymerpulver oder -granulate bei Baumaterialien auf Basis von Zement zum Tragen.

Die erfindungsgemäßen Polymerdispersionen eignen sich selbstverständlich auch für nicht-zementäre Anwendungen, insbesondere für füllstoffhaltige Beschichtungssysteme, speziell für flexible Beschichtungssysteme wie flexible Dachbeschichtungsmassen und Dichtungsmassen sowie für Klebstoffe, speziell füllstoffhaltige Bauklebstoffe wie Fliesenkleber.

Typische Rezepturen für flexible Dachbeschichtungsmassen umfassen neben Wasser auch erfindungsgemäße Polymerdispersionen. Pigmente wie Titandioxid oder Bariumsulfat und Füllstoffe wie Calziumcarbonat, Kreide, Talkum, Tone sowie übliche Hilfsmittel, z. B. Biozide, Benetzungsmittel, Filmbildehilfsmittel, z. B. Kohlenwasserstoffe wie Benzin, Weichmacher, Lösungs- und Frostschutzmittel, z. B. Glycerin oder Glykol, Verdicker (z. B. Assoziativverdicker) und Entschäumer. Der Anteil an Pigmenten liegt in der Regel im Bereich von 1 bis 5 Gewichtsteilen je 1 Gew.-Teil Copolymerisat. Der Anteil an Hilfsmitteln beträgt in der Regel 0,5 bis 25 Gew.-Teile je 100 Gew.-Teile Copolymerisat.

Eine typische Zusammensetzung für flexible Dachbeschichtungsmassen findet sich in Beispiel 2 der EP-A 501 272, auf das hiermit Bezug genommen wird, wobei die dort angegebene Polymerdispersion durch eine erfindungsgemäße Polymerdispersion ersetzt ist. Weitere Formulierungen für flexible Dachbeschichtungsmassen werden von L. Chander in Paint & Resin 9/10, 1981, S. 24-25 beschrieben, wobei die dort verwendeten Polymerdispersionen ebenfalls durch Dispersionen der erfindungsgemäßen Copolymerisate ersetzt werden können.

Typische Rezepturen für Fliesenkleber umfassen neben den erfindungsgemäßen Copolymerisaten und Wasser auch Füllstoffe, z. B. die oben genannten Füllstoffe und/oder Silikate, oder Kieselsäuren; weiterhin Hilfsstoffe, z. B. die oben genannten Hilfsstoffe. Der Anteil an Füllstoffen beträgt in der Regel 5 bis 10 Gew.-Teile auf 1 Gewichtsteil Copolymerisat. Der Anteil an Hilfsstoffen liegt in der Regel bei 1 bis 20 Gew.-Teilen je 100 Gew.-Teilen Copolymerisat. Typische Formulierungen für Fliesenkleber sind in der EP-A 35 332, Beispiele 2 und 4 angegeben, auf die hiermit Bezug genommen wird. Die dort verwendeten Polymerisat-Dispersionen können gegen die erfindungsgemäßen Copolymerisat-Dispersionen ausgetauscht werden.

Die nachfolgenden Beispiele erläutern die Erfindung, ohne sie zu begrenzen.

Beispiele

Die in den erfindungsgemäßen Beispielen eingesetzten erfindungsgemäßen Polymerdispersionen und die Polymerdispersionen der Vergleichsbeispiele wurden durch radikalische Polymerisation im wässrigen Medium erhalten.

Eine Aufstellung der in den Copolymerisaten der Polymerdispersionen einpolymerisierten Monomere in Gew.-% befindet sich in Tabelle 1. Der Feststoffgehalt der Polymerdispersion (d. h. die nichtflüchtigen Anteile) wurde aus dem Gewichtsverlust einer Probe (ca. 1 g) durch 2-stündige Trocknung in einem Umlufttrokkenschrank bei 120 °C bestimmt. Die Viskosität der Polymerdispersionen wurde mit Hilfe eines Rotationsviskosimeters (Rheomat) der Firma Paar Physica bei einer Schergeschwindigkeit von $250^{-1}$ gemäß DIN 53019 bei 23 °C bestimmt. Die Glasübergangstemperaturen Tg wurden mit Hilfe eines Differentialkalorimeters DSC 820 der Fa. Mettler Toledo bei einer linearen Aufheizgeschwindigkeit von 5 °C/min bestimmt.

I. Herstellung der erfindungsgemäßen Polymerdispersionen

Dispersion ED1 (nicht erfindungsgemäß)

In einem 2 1-Glasgefäß mit Ankerrührer (120 Upm) wurden 200 g vollentsalztes Wasser vorgelegt. Bei einer

Innentemperatur von 85 °C wurden 5 Gew.-% der Gesamtmenge eines Zulaufs 1 und 10 Gew.-% der Gesamtmenge eines Zulaufs 2 zugegeben. Die Vorlage wurde 10 min bei 85 °C anpolymerisiert. Anschließend wurde bei 85 °C innerhalb von 3,5 h die Restmenge von Zulauf 1 und Zulauf 2 räumlich getrennt kontinuierlich zugeführt. Nach weiteren 30 min bei dieser Temperatur wurde abgekühlt und das Reaktionsgemisch mit einer 20 gew.-%igen wässrigen Calciumhydroxidlösung neutralisiert. Unter Rühren wurde Zulauf 3 zugegeben. Die so hergestellte Zubereitung enthielt 49,8 Gew.-% nichtflüchtige Anteile und hatte einen pH-Wert von 7,2. Die Viskosität betrug 67 mPas. Das in der Dispersion enthaltene Copolymerisat besaß eine Glasübergangstemperatur Tg von -14 °C.

Zulauf 1:

| | |
|---|---|
| 185 g | vollentsalztes Wasser |
| 17 g | einer 30 gew.-%igen wässrigen Lösung des Natriumsalzes des Schwefelsäurehalbesters von ethoxyliertem Laurylalkohol mit einem Ethoxylierungsgrad von etwa 30 (Disponil FES 77 der Fa. Henkel); im Folgenden: Emulgatorlösung I |
| 13 g | einer 20 gew.-%igen wässrigen Lösung eines ethoxylierten $C_{16}/C_{18}$-Alkohols mit einem Ethoxylierungsgrad von etwa 18; im Folgenden: Emulgatorlösung II |
| 110 g | Styrol |
| 385 g | n-Butylacrylat |
| 17 g | Acrylnitril |
| 33 g | 2-Hydroxyethylacrylat |
| 6 g | Methacrylsäure |

Zulauf 2:

| | |
|---|---|
| 60 g | vollentsalztes Wasser |
| 2 g | Natriumperoxodisulfat |

Zulauf 3:

| | |
|---|---|
| 8 g | Emulgatorlösung I |
| 25 g | Emulgatorlösung II |

Dispersion ED2

In einem 2 1-Glasgefäß mit Ankerrührer (120 Upm) wurden 320 g vollentsalztes Wasser vorgelegt. Bei einer Innentemperatur von 85 °C wurden 5 Gew.-% der Gesamtmenge eines Zulaufs 1 und 10 Gew.-% der Gesamtmenge eines Zulaufs 2 zugegeben. Die Vorlage wurde 10 min bei 85 °C anpolymerisiert. Anschließend wurde bei 85 °C innerhalb von 3,5 h die Restmenge von Zulauf 1 und 2 räumlich getrennt kontinuierlich zugeführt. Nach weiteren 30 min bei dieser Temperatur wurde abgekühlt und das Reaktionsgemisch mit einer 20 gew.-%igen wässrigen Calciumhydroxidlösung neutralisiert. Unter Rühren wurde Zulauf 3 zugegeben. Die so hergestellte Dispersion enthielt 49,2 Gew.-% nichtflüchtige Anteile und hatte einen pH-Wert von 7,0. Die Viskosität betrug 46 mPas. Das in der Dispersion enthaltene Copolymerisat besaß eine Glasübergangstemperatur Tg von -20 °C.

Zulauf 1:

| | |
|---|---|
| 371 g | vollentsalztes Wasser |
| 30 g | Emulgatorlösung I |
| 23 g | Emulgatorlösung II |
| 180 g | Styrol |
| 725 g | n-Butylacrylat |
| 90 g | 2-Hydroxyethylacrylat |
| 5 g | Methacrylsäure |

(fortgesetzt)

Zulauf 2:

| | |
|---|---|
| 120 g | vollentsalztes Wasser |
| 4 g | Natriumperoxodisulfat |

Zulauf 3:

| | |
|---|---|
| 14 g | Emulgatorlösung I |
| 45 g | Emulgatorlösung II |

Dispersion ED3 (nicht erfindungsgemäß)

In einem 4 1-Glasgefäß mit Ankerrührer (120 Upm) wurden 450 g vollentsalztes Wasser vorgelegt. Bei einer Innentemperatur von 85 °C wurden 5 Gew.-% der Gesamtmenge eines Zulaufs 1 und 10 Gew.-% der Gesamtmenge eines Zulaufs 2 zugegeben. Die Vorlage wurde 10 min bei 90 °C anpolymerisiert. Anschließend wurden bei 90 °C innerhalb von 3 h die Restmenge von Zulauf 1 und in 3,5 h die Restmenge von Zulauf 2 räumlich getrennt zugeführt. Nach weiteren 30 min bei dieser Temperatur wurde das Reaktionsgemisch abgekühlt und mit einer 20 gew.-%igen wässrigen Calciumhydroxidlösung neutralisiert. Die so hergestellte Polymerdispersion enthielt 54,9 % nichtflüchtige Anteile und hatte einen pH-Wert von 7,0. Die Viskosität betrug 148 mPas. Das enthaltene Copolymerisat besaß eine Glasübergangstemperatur von -8 °C.

Zulauf 1:

| | |
|---|---|
| 539 g | vollentsalztes Wasser |
| 28 g | einer 25 gew.-%igen wässrigen Lösung des Natriumsalzes des Schwefelsäurehalbesters von ethoxyliertem Nonylphenol mit einem Ethoxylierungsgrad von etwa 25; im Folgenden: Emulgatorlösung III |
| 20 g | einer 20 gew.-%igen wässrigen Lösung des Natriumsalzes des Schwefelsäurehalbesters von ethoxyliertem Octylphenol mit einem Ethoxylierungsgrad von etwa 25; im Folgenden: Emulgatorlösung IV |
| 960 g | n-Butylacrylat |
| 390 g | Methylmethacrylat |
| 135 g | 2-Hydroxyethylacrylat |
| 15 g | Acrylsäure |

Zulauf 2:

| | |
|---|---|
| 95 g | vollentsalztes Wasser |
| 7 g | Natriumperoxodisulfat |

Dispersion ED4 (nicht erfindungsgemäß)

In einem 4 1-Glasgefäß mit Ankerrührer (120 Upm) wurden 450 g vollentsalztes Wasser vorgelegt. Bei einer Innentemperatur von 85 °C wurden 5 Gew.-% der Gesamtmenge eines Zulaufs 1 und 10 Gew.-% der Gesamtmenge eines Zulaufs 2 zugegeben. Die Vorlage wurde 10 min bei 85 °C anpolymerisiert. Anschließend wurden bei 85 °C innerhalb von 3,5 h die Restmenge von Zulauf 1 und Zulauf 2 räumlich getrennt zugeführt. Nach weiteren 30 min bei dieser Temperatur wurde das Reaktionsgemisch abgekühlt und mit einer 20 gew.-%igen wässrigen Calciumhydroxidlösung neutralisiert. Anschließend wurde unter Rühren Zulauf 3 zugegeben. Die so hergestellte Polymerdispersion enthielt 50,4 % nichtflüchtige Anteile und hatte einen pH-Wert von 7,0. Die Viskosität betrug 45 mPas. Das enthaltene Copolymerisat besaß eine Glasübergangstemperatur von -31 °C.

Zulauf 1:

| | |
|---|---|
| 413 g | vollentsalztes Wasser |
| 35 g | Emulgatorlösung I |

(fortgesetzt)

Zulauf 1:

| | |
|---|---|
| 26 g | Emulgatorlösung II |
| 420 g | 2-Ethylhexylacrylat |
| 420 g | n-Butylacrylat |
| 210 g | Styrol |
| 63 g | 2-Hydroxyethylacrylat |

Zulauf 2:

| | |
|---|---|
| 90 g | vollentsalztes Wasser |
| 4 g | Natriumperoxodisulfat |

Zulauf 3:

| | |
|---|---|
| 18 g | Emulgatorlösung I |
| 53 g | Emulgatorlösung II |

Dispersion ED5 (nicht erfindungsgemäß)

In einem 4 1-Glasgefäß mit Ankerrührer (120 Upm) wurden 450 g vollentsalztes Wasser vorgelegt. Bei einer Innentemperatur von 85 °C wurden 5 Gew.-% der Gesamtmenge eines Zulaufs 1 und 10 Gew.-% der Gesamtmenge eines Zulaufs 2 zugegeben. Die Vorlage wurde 10 min bei 85 °C anpolymerisiert. Anschließend wurden bei 85 °C innerhalb von 3,5 h die Restmenge von Zulauf 1 und Zulauf 2 räumlich getrennt zugeführt. Nach weiteren 30 min bei dieser Temperatur wurde das Reaktionsgemisch abgekühlt und mit einer 20 gew.-%igen wässrigen Calciumhydroxidlösung neutralisiert. Anschließend wurde unter Rühren Zulauf 3 zugegeben. Die so hergestellte Polymerdispersion enthielt 50,3 % nichtflüchtige Anteile und hatte einen pH-Wert von 6,9. Die Viskosität betrug 44 mPas. Das enthaltene Copolymerisat besaß eine Glasübergangstemperatur von -26 °C.

Zulauf 1:

| | |
|---|---|
| 413 g | vollentsalztes Wasser |
| 35 g | Emulgatorlösung I |
| 26 g | Emulgatorlösung II |
| 368 g | 2-Ethylhexylacrylat |
| 420 g | n-Butylacrylat |
| 263 g | Styrol |
| 63 g | 2-Hydroxyethylacrylat |

Zulauf 2:

| | |
|---|---|
| 90 g | vollentsalztes Wasser |
| 4 g | Natriumperoxodisulfat |

Zulauf 3:

| | |
|---|---|
| 18 g | Emulgatorlösung I |
| 53 g | Emulgatorlösung II |

Dispersion ED6 (nicht erfindungsgemäß)

In einem 2 1-Glasgefäß mit Ankerrührer (120 Upm) wurden 250 g vollentsalztes Wasser vorgelegt. Bei einer Innentemperatur von 85 °C wurden 5 Gew.-% der Gesamtmenge eines Zulaufs 1 und 10 Gew.-% der Gesamtmenge

eines Zulaufs 2 zugegeben. Die Vorlage wurde 10 min bei 85 °C anpolymerisiert. Anschließend wurden bei 85 °C innerhalb von 3,5 h die Restmenge von Zulauf 1 und Zulauf 2 räumlich getrennt zugeführt. Nach weiteren 30 min bei dieser Temperatur wurde das Reaktionsgemisch abgekühlt und mit einer 20 gew.-%igen wässrigen Calciumhydroxidlösung neutralisiert. Anschließend wurde unter Rühren Zulauf 3 zugegeben. Die so hergestellte Polymerdispersion enthielt 50,3 % nichtflüchtige Anteile und hatte einen pH-Wert von 7,0. Die Viskosität betrug 47 mPas. Das enthaltene Copolymerisat besaß eine Glasübergangstemperatur von -25 °C.

Zulauf 1:

| | |
|---|---|
| 250 g | vollentsalztes Wasser |
| 18 g | Emulgatorlösung I |
| 14 g | Emulgatorlösung IV |
| 220 g | 2-Ethylhexylacrylat |
| 193 g | n-Butylacrylat |
| 138 g | Styrol |
| 22 g | 2-Hydroxyethylacrylat |

Zulauf 2:

| | |
|---|---|
| 50 g | vollentsalztes Wasser |
| 2 g | Natriumperoxodisulfat |

Zulauf 3:

| | |
|---|---|
| 9 g | Emulgatorlösung I |
| 28 g | Emulgatorlösung II |

II. Herstellung der Vergleichsdispersionen

Vergleichsdispersion VD1

In einem 2 1-Glasgefäß mit Ankerrührer (120 Upm) wurden 280 g vollentsalztes Wasser vorgelegt. Bei einer Innentemperatur von 85 °C wurden 5 Gew.-% der Gesamtmenge eines Zulaufs 1 und 10 Gew.-% der Gesamtmenge eines Zulaufs 2 zugegeben. Die Vorlage wurde 10 min bei 85 °C anpolymerisiert. Anschließend wurden bei 85 °C innerhalb von 3,5 h die Restmenge von Zulauf 1 und Zulauf 2 räumlich getrennt zugeführt. Nach weiteren 30 min bei dieser Temperatur wurde das Reaktionsgemisch abgekühlt und mit einer 20 gew.-%igen wässrigen Calciumhydroxidlösung neutralisiert. Anschließend wurde unter Rühren Zulauf 3 zugegeben. Die so hergestellte Polymerdispersion enthielt 50,3 % nichtflüchtige Anteile und hatte einen pH-Wert von 7,2. Die Viskosität betrug 48 mPas. Das enthaltene Copolymerisat besaß eine Glasübergangstemperatur von -24 °C.

Als Zulauf 1 wurde verwendet:

| | |
|---|---|
| 116 g | vollentsalztes Wasser |
| 15 g | Emulgatorlösung I |
| 23 g | Emulgatorlösung II |
| 288 g | 2-Ethylhexylacrylat |
| 72 g | Styrol |
| 74 g | Acrylnitril |
| 38 g | 2-Hydroxyethylacrylat |
| 7 g | Methacrylsäure |

Als Zulauf 2 wurde verwendet:

(fortgesetzt)

Als Zulauf 2 wurde verwendet:

| | |
|---|---|
| 100 g | vollentsalztes Wasser |
| 3 g | Natriumperoxodisulfat |

Als Zulauf 3 wurde verwendet:

| | |
|---|---|
| 8 g | Emulgatorlösung I |
| 15 g | Emulgatorlösung II |

Vergleichsdispersion VD2

In einem 2 1-Glasgefäß mit Ankerrührer (120 Upm) wurden 170 g vollentsalztes Wasser vorgelegt. Bei einer Innentemperatur von 85 °C wurden 5 Gew.-% der Gesamtmenge eines Zulaufs 1 und 10 Gew.-% der Gesamtmenge eines Zulaufs 2 zugegeben. Die Vorlage wurde 10 min bei 85 °C anpolymerisiert. Anschließend wurden bei 85 °C innerhalb von 3,5 h die Restmenge von Zulauf 1 und Zulauf 2 räumlich getrennt zugeführt. Nach weiteren 30 min bei dieser Temperatur wurde das Reaktionsgemisch abgekühlt und mit einer 20 gew.-%igen wässrigen Calciumhydroxidlösung neutralisiert. Anschließend wurde unter Rühren Zulauf 3 zugegeben. Die so hergestellte Polymerdispersion enthielt 48,9 % nichtflüchtige Anteile und hatte einen pH-Wert von 7,0. Die Viskosität betrug 388 mPas. Das enthaltene Copolymerisat besaß eine Glasübergangstemperatur von -21 °C.

Als Zulauf 1 wurde verwendet:

| | |
|---|---|
| 197 g | vollentsalztes Wasser |
| 15 g | Emulgatorlösung I |
| 11 g | Emulgatorlösung II |
| 391 g | 2-Ethylhexylacrylat |
| 176 g | Styrol |
| 16 g | Acrylnitril |
| 38 g | Acrylamid |
| 9 g | Methacrylsäure |

Als Zulauf 2 wurde verwendet:

| | |
|---|---|
| 60 g | vollentsalztes Wasser |
| 2 g | Natriumperoxodisulfat |

Als Zulauf 3 wurde verwendet:

| | |
|---|---|
| 8 g | Emulgatorlösung I |
| 23 g | Emulgatorlösung II |

Vergleichsdispersion VD3

In einem 4 1-Glasgefäß mit Ankerrührer (120 Upm) wurden 500 g vollentsalztes Wasser vorgelegt. Bei einer Innentemperatur von 85 °C wurden 5 Gew.-% der Gesamtmenge eines Zulaufs 1 und 10 Gew.-% der Gesamtmenge eines Zulaufs 2 zugegeben. Die Vorlage wurde 10 min bei 85 °C anpolymerisiert. Anschließend wurden bei 85 °C innerhalb von 3,5 h die Restmenge von Zulauf 1 und Zulauf 2 räumlich getrennt zugeführt. Nach weiteren 30 min bei dieser Temperatur wurde das Reaktionsgemisch abgekühlt und mit einer 20 gew.-%igen wässrigen Calciumhydroxidlösung neutralisiert. Anschließend wurde unter Rühren Zulauf 3 zugegeben. Die so hergestellte Polymerdispersion enthielt 49,4 % nichtflüchtige Anteile und hatte einen pH-Wert von 7,2. Die Viskosität betrug 298 mPas. Das enthaltene Copolymerisat besaß eine Glasübergangstemperatur von -20 °C.

Als Zulauf 1 wurde verwendet:

(fortgesetzt)

Als Zulauf 1 wurde verwendet:

| | |
|---|---|
| 561 g | vollentsalztes Wasser |
| 43 g | Emulgatorlösung I |
| 33 g | Emulgatorlösung II |
| 853 g | 2-Ethylhexylacrylat |
| 382 g | Styrol |
| 29 g | Acrylnitril |
| 118 g | 2-Hydroxyethylacrylat |
| 88 g | Methacrylsäure |

Als Zulauf 2 wurde verwendet:

| | |
|---|---|
| 120 g | vollentsalztes Wasser |
| 5 g | Natriumperoxodisulfat |

Als Zulauf 3 wurde verwendet:

| | |
|---|---|
| 22 g | Emulgatorlösung I |
| 65 g | Emulgatorlösung II |

Vergleichsdispersion VD4

Die Herstellung dieser Dispersion wurde analog zur Herstellung der Dispersion VD3 durchgeführt.

Als Zulauf 1 wurde verwendet:

| | |
|---|---|
| 399 g | vollentsalztes Wasser |
| 140 g | einer 15 gew.-%igen wässrigen Lösung eines Natriumdodecylsulfats (Emulgatorlösung V) |
| 928 g | 2-Ethylhexylacrylat |
| 433 g | Styrol |
| 39 g | Acrylnitril |
| 124 g | 2-Hydroxyethylacrylat |
| 23 g | Methacrylsäure |

Als Zulauf 2 wurde verwendet:

| | |
|---|---|
| 120 g | vollentsalztes Wasser |
| 5 g | Natriumperoxodisulfat |

Als Zulauf 3 wurde verwendet:

| | |
|---|---|
| 140 g | Emulgatorlösung V |

Die so hergestellte Polymerdispersion enthielt 50,0 % nichtflüchtige Anteile und hatte einen pH-Wert von 6,9. Die Viskosität betrug 76 mPas. Das enthaltene Copolymerisat besaß eine Glasübergangstemperatur von -21 °C.

III. Prüfung der Stabilität

Als Kriterien für die Stabilität der Dispersionen wurde die Koagulatbildung, die Scherstabilität und die Elektrolytstabilität wie nachstehend beschrieben bestimmt.

Die Neigung zur Koagulatbildung bei der Emulsionspolymerisation wurde durch Filtration der abgekühlten und neutralisierten Polymerdispersionen über ein Perlonsieb mit einer Maschenweite von 45 μm bestimmt. Die angegebenen Koagulatwerte stellen das Verhältnis des Filtrationsrückstands nach oberflächlicher Trocknung zur Gesamtmasse der

Polymerdispersion dar.

Zur Prüfung der Scherstabilität wurde von jeder Dispersion eine unverdünnte Probe mit Hilfe eines Dispermats (VMA Getzmann GmbH) für 10 min bei 10 000 Upm scherbelastet. Anschließend wurde eine geringe Menge der Probe auf einem Glasträger verstrichen. Zum Vergleich wurde eine geringe Menge der nicht scherbelasteten Dispersion ebenfalls auf einem Glasträger verstrichen und vergleichend auf den Gehalt an Koagulat- bzw. Feinkoagulat (sogenannte "Stippen") untersucht. Bei einer deutlichen Erhöhung des Koagulat- bzw. Stippengehalts im Vergleich zur nicht scherbelasteten Probe gilt die Probe als nicht scherstabil.

Zur Prüfung der Elektrolytstabilität wurde eine Probe der jeweiligen Dispersion tropfenweise zu einer auf 23 °C temperierten und gerührten wässrigen Calciumchlorid-Lösung definierter Konzentration gegeben (jeweils 50 g Calciumchlorid-Lösung mit Calciumchlorid-Gehalten zwischen 0,5 und 7,5 Gew.-%). In Tabelle 1 ist für jede Dispersion die Calciumchlorid-Konzentration der Lösung angegeben, bei der die Probe der jeweiligen Dispersion noch stabil war.

Die Ergebnisse sind in Tabelle 2 zusammengefasst.

IV. Prüfung der anwendungstechnischen Eigenschaften

Als Maß für die Hydrophilie der Polymerdispersion wurde die Wasseraufnahme von Filmen aus den jeweiligen Polymerdispersionen untersucht. Durch Trocknen für 7 Tage bei 50 °C in einem Umlufttrokkenschrank wurden von jeder Polymerdispersion Polymerfilme mit einer Trockenschichtdicke von ca. 750 μm hergestellt. Aus den Filmen wurden jeweils 2 cm lange und 1 cm breite Stücke herausgeschnitten und 24 h lang bei Raumtemperatur in Wasser gelagert. Anschließend wurden die Stücke oberflächlich abgetrocknet und gewogen. Die Wasseraufnahme berechnet sich aus dem Quotienten der Filmgewichte nach und vor der Wasserlagerung.

Zur Bestimmung der Anwendungseigenschaften als Zusatz zu Baumaterialien auf Basis hydraulischer Bindemittel wurden mit den Polymerdispersionen modifizierte zementöse Massen hergestellt. Dazu wurden 182 Gewichtsteile Portland-Zement PZ 45F (CEM I 42,5 R), 218 Gewichtsteile der jeweiligen Polymerdispersion (eingestellt auf einen Feststoffgehalt von 50 %), 53 Gewichtsteile Wasser, 149 Gewichtsteile Quarzmehl (Korngröße ≤ 0,09 mm), 164 Gewichtsteile Quarzsand (Korngröße 0,08 bis 0,2 mm), 218 Gewichtsteile Quarzsand (Korngröße 0,2 bis 0,5 mm), 14 Gewichtsteile Entschäumer Lumiten® E-P 3108 der Fa. BASF Aktiengesellschaft und 2 Gewichtsteile Entschäumer Agitan® 281 der Fa. Münzig zusammengegeben und vermischt.

Nach dem Zusammengeben und Vermischen aller Komponenten wird die sogenannte "offene Zeit" bestimmt, d. h. die Zeit, während der die zementösen Massen ohne Bildung von Rissen oder festen Partikeln in der Masse noch plastisch verformbar sind. Günstig für die Anwendung ist eine offene Zeit von > 30 min.

Zur Bestimmung der Geruchsbildungsneigung wurden direkt nach der Herstellung der jeweiligen polymermodifizierten zementösen Massen Proben genommen und in geschlossenen Gefäßen 30 min bei 50 °C in einem Trockenschrank erwärmt. Anschließend wurde eine Geruchsprüfung durchgeführt und mit einem feuchten pH-Papier im Gasraum des Gefäßes auf die Bildung von Ammoniak geprüft.

Zur Überprüfung der Festigkeit und der Elastizität der erhaltenen zementösen Massen wurden aus diesen Zementfilme mit einer Nassschichtdicke von 2 mm hergestellt. Die Filme wurden 28 Tage bei Normklima (23 °C; 50 % relative Luftfeuchte) gehärtet. Anschließend wurden in Anlehnung an die DIN 53455 die Reißkraft und die Reißdehnung der Filme mittels eines automatischen Materialprüfgeräts mit einer Abzugsgeschwindigkeit von 100 mm/min gemessen. Die Ergebnisse der anwendungstechnischen Prüfung sind in Tabelle 2 zusammengefasst.

In Tabelle 1 ist die Monomerzusammensetzung der in den Dispersionen enthaltenen Copolymerisate in Gew.-% zusammengefasst. Dabei steht nBA für n-Butylacrylat, S für Styrol, AN für Acrylnitril, HEA für 2-Hydroxyethylacrylat, MAS für Methacrylsäure, EHA für 2-Ethylhexylacrylat, MMA für Methylmethacrylat, AS für Acrylsäure, MAN für Methacrylnitril und AM für Acrylamid.

Der Emulgatorgehalt, gerechnet als Feststoff und bezogen auf das Copolymerisat, betrug in allen Dispersionen mit Ausnahme von ED3 etwa 3 Gew.-%. Der Emulgatorgehalt der Dispersion ED3 betrug etwa 1,1 Gew.-%.

Tabelle 1:

| Dispersion | Monomere [Gew.-%] |
|---|---|
| ED1 * | 70 nBA 20 S 3 AN 6 HEA 1 MAS |
| ED2 | 72,5 nBA 18 S 9 HEA 0,5 MAS |
| ED3 * | 64 nBA 26 MMA 9 HEA 1 AS |
| ED4 * | 38 nBA 38 EHA 19 S 5 HEA |
| ED5 * | 38 nBA 34 EHA 24 S 4 HEA |

(fortgesetzt)

| Dispersion | Monomere [Gew.-%] |
|---|---|
| ED6 * | 34 nBA 38 EHA 25 S 3 HEA |
| VD1 | 60 EHA 15 S 15,5 AN 8 HEA 1,5 MAS |
| VD2 | 62 EHA 28 S 2,5 AN 6 AM 1,5 MAS |
| VD3 | 58 EHA 26 S 2 AN 8 HEA 6 MAS |
| VD4 | 60 EHA 28 S 2,5 AN 8 HEA 1,5 MAS |
| * nicht erfindungsgemäß | |

Tabelle 2

| Dispersion | Emulgator | | | Stabilität | | | Anwendungseigenschaften | | | | |
|---|---|---|---|---|---|---|---|---|---|---|---|
| | alkox. anionisch | alkox. nichtionisch | nicht alkox. | Koagulat [%] | Scherstabilität | Elektrolytstabilität [$CaCl_2$- Konz. in Gew.-%] | Wasseraufnahme [%] | Geruch | offene Zeit [min] | Reißkraft [N/mm²] | Reißdehnung [%] |
| ED1* | + | + | - | <0,05 | stabil | 5 | 8 | gering | >30 | 2,1 | 13 |
| ED2 | + | + | - | 0,12 | stabil | 2,5 | 5 | gering | >30 | 1,5 | 26 |
| ED3* | + | + | - | 0,08 | stabil | 5 | 7 | gering | >30 | 1,8 | 14 |
| ED4* | + | + | - | <0,05 | stabil | 5 | 10 | gering | >30 | 1,2 | 52 |
| ED5* | + | + | - | 0,09 | stabil | 5 | 8 | gering | >30 | 1,4 | 48 |
| ED6* | + | + | - | 0,16 | stabil | 2,5 | 8 | gering | >30 | 1,1 | 47 |
| VD1 | + | + | - | 0,10 | stabil | 5 | 28 | gering | >30 | 2,6 | 7 |
| VD2 | + | + | - | 0,09 | stabil | 7,5 | 21 | stark1) | >30 | 1,9 | 14 |
| VD3 | + | + | - | 0,15 | stabil | 5 | 36 | gering | 20-30 | - 2) | - 2) |
| VD4 | | | + | 0,09 | stabil | 2,5 | 22 | gering | 5-10 3) | 1,2 | 11 |

1) starke Geruchsentwicklung durch Ausgasen von Ammoniak
2) nicht bestimmbar, da Masse zu spröde; keine Festigkeit
3) spröde Masse mit sehr geringer Kohäsion
* nicht erfindungsgemäß

**Patentansprüche**

1. Verwendung von Ammoniak-freien, wässrigen Polymerdispersionen, enthaltend wenigstens ein in der wässrigen Phase dispergiertes Copolymerisat, das als Monomere

   a) 40 bis 80 Gew.-% wenigstens eines Esters der Acrylsäure mit $C_2$-$C_{12}$-Alkanolen,
   b) 10 bis 40 Gew.-% wenigstens eines vinylaromatischen Monomers und/oder wenigstens eines Esters der Methacrylsäure mit $C_1$-$C_4$-Alkanolen,
   c) 2 bis 15 Gew.-% wenigstens eines Monoesters eines $C_2$-$C_{10}$-Alkandiols mit Acrylsäure oder Methacrylsäure,
   d) 0,2 bis 0,8 Gew.-% ethylenisch ungesättigte Monomere, die wenigstens eine Säuregruppe aufweisen, oder deren Salze,
   e) weniger als 5 Gew.-% ethylenisch ungesättigte Nitrile und
   f) weniger als 1 Gew.-% Amide $\alpha,\beta$-ethylenisch ungesättigter Mono- und Dicarbonsäuren

   einpolymerisiert enthält, als Zusatz für mineralische Baumaterialien auf Basis hydraulischer Bindemittel.

2. Verwendung nach Anspruch 1, wobei die Polymerdispersion 0,2 bis 10 Gew.-%, bezogen auf das Copolymer, wenigstens eines alkoxylierten Emulgators enthält.

3. Verwendung nach Anspruch 2, wobei als alkoxilierter Emulgator ein Gemisch aus wenigstens einem nichtionischen alkoxylierten Emulgator und wenigstens einem anionischen Emulgator eingesetzt wird.

4. Verwendung nach Anspruch 3, wobei der alkoxylierte nichtionische Emulgator ausgewählt ist unter nichtionischen ethoxylierten $C_6$-$C_{32}$-Fettalkoholen, $C_6$-$C_{32}$-Oxoalkoholen und $C_6$-$C_{32}$-Alkylphenolen mit einem mittleren Ethoxylierungsgrad von 2 bis 150.

5. Verwendung nach Anspruch 3 oder 4, wobei der anionische Emulgator ein alkoxylierter anionischer Emulgator ist, der ausgewählt ist unter anionischen Schwefelsäure-Halbestern ethoxylierter $C_6$-$C_{32}$-Fettalkohole, ethoxylierter $C_6$-$C_{32}$-Oxoalkohole und ethoxylierter $C_6$-$C_{32}$-Alkylphenole mit einem mittleren Ethoxylierungsgrad von 2 bis 150 und den Salzen davon.

6. Verwendung nach einem der vorhergehenden Ansprüche, wobei das Copolymerisat eine Glasübergangstemperatur Tg unterhalb von +40 °C aufweist.

7. Verwendung nach einem der vorhergehenden Ansprüche, wobei das Copolymerisat als Monomere

   a) 55 bis 80 Gew.-% wenigstens eines Monomers, ausgewählt unter Ethylacrylat, n-Butylacrylat und 2-Ethylhexylacrylat,
   b) 12 bis 35 Gew.-% Styrol und/oder Methylmethacrylat,
   c) 3 bis 9 Gew.-% wenigstens eines Monoesters eines $C_2$-$C_6$-Alkandiols mit Acrylsäure- oder Methacrylsäure, und
   d) 0,2 bis 0,8 Gew.-% wenigstens einer ethylenisch ungesättigten Carbonsäure, ausgewählt unter Acrylsäure, Methacrylsäure, Maleinsäure und Itaconsäure,

   einpolymerisiert enthält.

8. Verwendung nach einem der vorhergehenden Ansprüche, wobei die Polymerdispersionen einen pH-Wert im Bereich von 6,7 bis 8,0 aufweisen.

9. Verwendung nach Anspruch 8, wobei der pH-Wert durch Zugabe wenigstens einer Base, ausgewählt unter Alkalimetall- und Erdalkalimetallhydroxiden, eingestellt wird.

10. Verwendung von Polymerpulvern oder -granulaten, erhältlich durch Entfernen von mindestens 80 Gew.-% der flüchtigen Bestandteile aus einer Polymerdispersion gemäß einem der Ansprüche 1 bis 9, als Zusatz für mineralische Baumaterialien auf Basis von hydraulischen Bindemitteln.

11. Verwendung nach einem der vorhergehenden Ansprüche, wobei das Copolymerisat in einer Menge von 5 bis 250 Gew.-%, bezogen auf das Trockengewicht des hydraulischen Bindemittels, eingesetzt wird.

**12.** Verwendung nach einem der vorhergehenden Ansprüche, wobei das hydraulische Bindemittel Zement ist.

**13.** Mineralische Baumaterialien auf Basis hydraulischer Bindemittel, enthaltend, bezogen auf das Trockengewicht des mineralischen Anteils, 0,5 bis 150 Gew.-% wenigstens eines Copolymerisats in Form einer wässrigen Polymerdispersion gemäß einem der Ansprüche 1 bis 9 und/oder eines Polymerpulvers oder -granulats gemäß Anspruch 10.

**14.** Verfahren zur Verbesserung der mechanischen Festigkeit, Elastizität und Verarbeitbarkeit von Baumaterialien auf Basis hydraulischer Bindemittel, wobei man

- wenigstens ein hydraulisches Bindemittel,
- wenigstens eine wässrige Polymerdispersion gemäß einem der Ansprüche 1 bis 9 und/oder ein Polymerpulver oder -granulat gemäß Anspruch 10, sowie gegebenenfalls
- Wasser und/oder Zuschläge

miteinander vermischt.

## Claims

**1.** The use of ammonia-free, aqueous polymer dispersions comprising at least one copolymer which is dispersed in the aqueous phase and comprises, as polymerized monomers,

a) from 40 to 80% by weight of at least one ester of acrylic acid with $C_2$-$C_{12}$-alkanols,
b) from 10 to 40% by weight of at least one vinylaromatic monomer and/or at least one ester of methacrylic acid with $C_1$-$C_4$-alkanols,
c) from 2 to 15% by weight of at least one monoester of a $C_2$-$C_{10}$-alkanediol with acrylic acid or methacrylic acid,
d) from 0.2 to 0.8% by weight of ethylenically unsaturated monomers which have at least one acid group, or salts thereof,
e) less than 5% by weight of ethylenically unsaturated nitriles and
f) less than 1% by weight of amides of $\alpha,\beta$-ethylenically unsaturated mono- and dicarboxylic acids,

as an additive for mineral building materials based on hydraulic binders.

**2.** The use according to claim 1, wherein the polymer dispersion comprises from 0.2 to 10% by weight, based on the copolymer, of at least one alkoxylated emulsifier.

**3.** The use according to claim 2, wherein a mixture of at least one nonionic alkoxylated emulsifier and at least one anionic emulsifier is used as alkoxylated emulsifier.

**4.** The use according to claim 3, wherein the alkoxylated nonionic emulsifier is selected from nonionic ethoxylated $C_6$-$C_{32}$-fatty alcohols, $C_6$-$C_{32}$-oxo alcohols and $C_6$-$C_{32}$-alkyl-phenols having a mean degree of ethoxylation of from 2 to 150.

**5.** The use according to claim 3 or 4, wherein the anionic emulsifier is an alkoxylated anionic emulsifier which is selected from anionic sulfuric monoesters of ethoxylated $C_6$-$C_{32}$-fatty alcohols, ethoxylated $C_6$-$C_{32}$-oxo alcohols and ethoxylated $C_6$-$C_{32}$-alkylphenols having a mean degree of ethoxylation of from 2 to 150 and the salts thereof.

**6.** The use according to any of the preceding claims, wherein the copolymer has a glass transition temperature $T_g$ below +40°C.

**7.** The use according to any of the preceding claims, wherein the copolymer comprises, as polymerized monomers,

a) from 55 to 80% by weight of at least one monomer selected from ethyl acrylate, n-butyl acrylate and 2-ethylhexyl acrylate,
b) from 12 to 35% by weight of styrene and/or methyl methacrylate,
c) from 3 to 9% by weight of at least one monoester of a $C_2$-$C_6$-alkanediol with acrylic acid or methacrylic acid, and
d) from 0.2 to 0.8% by weight of at least one ethylenically unsaturated carboxylic acid selected from acrylic acid, methacrylic acid, maleic acid and itaconic acid.

8. The use according to any of the preceding claims, wherein the polymer dispersions have a pH of from 6.7 to 8.0.

9. The use according to claim 8, wherein the pH is established by adding at least one base selected from alkali metal and alkaline earth metal hydroxides.

10. The use of polymer powders or polymer granules obtainable by removing at least 80% by weight of the volatile components from a polymer dispersion according to any of claims 1 to 9, as an additive for mineral building materials based on hydraulic binders.

11. The use according to any of the preceding claims, wherein the copolymer is used in an amount of from 5 to 250% by weight, based on the dry weight of the hydraulic binder.

12. The use according to any of the preceding claims, wherein the hydraulic binder is cement.

13. A mineral building material based on a hydraulic binder, comprising from 0.5 to 150% by weight, based on the dry weight of the mineral fraction, of at least one copolymer in the form of an aqueous polymer dispersion according to any of claims 1 to 9 and/or of a polymer powder or polymer granules according to claim 10.

14. A process for improving the mechanical strength, elasticity and processibility of building materials based on hydraulic binders, wherein

- at least one hydraulic binder,
- at least one aqueous polymer dispersion according to any of claims 1 to 9 and/or a polymer powder or polymer granules according to claim 10 and, if appropriate,
- water and/or additives

are mixed with one another.

## Revendications

1. Utilisation de dispersions polymères aqueuses, exemptes d'ammoniac, contenant au moins un copolymère dispersé dans la phase aqueuse, qui contient, sous forme copolymérisée, comme monomères

a) 40 à 80% en poids d'au moins un ester de l'acide acrylique avec des alcanols en $C_2$-$C_{12}$,
b) 10 à 40% en poids d'au moins un monomère aromatique de vinyle et/ou au moins un ester de l'acide méthacrylique avec des alcanols en $C_1$-$C_4$,
c) 2 à 15% en poids d'au moins un monoester d'un alcanediol en $C_2$-$C_{10}$ avec de l'acide acrylique ou méthacrylique,
d) 0 , 2 à 0,8% en poids de monomères monoéthyléniquement insaturés, qui présentent au moins un groupe acide, ou leurs sels,
e) moins de 5% en poids de nitriles éthyléniquement insaturés et
f) moins de 1% en poids d'amides d'acides monocarboxyliques et dicarboxyliques éthyléniquement $\alpha,\beta$-insaturés

comme additif pour des matériaux de construction minéraux à base de liants hydrauliques.

2. Utilisation selon la revendication 1, où la dispersion polymère contient 0,2 à 10% en poids, par rapport au copolymère, d'au moins un émulsifiant alcoxylé.

3. Utilisation selon la revendication 2, où on utilise, comme émulsifiant alcoxylé, un mélange d'au moins un émulsifiant alcoxylé non ionique et d'au moins un émulsifiant anionique.

4. Utilisation selon la revendication 3, où l'émulsifiant alcoxylé non ionique est choisi parmi les alcools gras en $C_6$-$C_{32}$, les oxoalcools en $C_6$-$C_{32}$ et les alkylphénols en $C_6$-$C_{32}$ éthoxylés non ioniques présentant un degré d'éthoxylation moyen de 2 à 150.

5. Utilisation selon la revendication 3 ou 4, où l'émulsifiant anionique est un émulsifiant alcoxylé anionique qui est choisi parmi les semi-esters anioniques de l'acide sulfurique d'alcools gras en $C_6$-$C_{32}$ éthoxylés, d'oxoalcools en

$C_6$-$C_{32}$ éthoxylés et d'alkylphénols en $C_6$-$C_{32}$ éthoxylés présentant un degré d'éthoxylation moyen de 2 à 150 et leurs sels.

**6.** Utilisation selon l'une quelconque des revendications précédentes, où le copolymère présente une température de transition vitreuse Tg inférieure à +40°C.

**7.** Utilisation selon l'une quelconque des revendications précédentes, où le copolymère contient, sous forme copolymérisée, comme monomères

a) 55 à 80% en poids d'au moins un monomère, choisi parmi l'acrylate d'éthyle, l'acrylate de n-butyle et l'acrylate de 2-éthyle,
b) 12 à 35% en poids de styrène et/ou de méthacrylate de méthyle,
c) 3 à 9% en poids d'au moins un monoester d'un alcanediol en $C_2$-$C_6$ avec de l'acide acrylique ou méthacrylique, et
d) 0,2 à 0,8% en poids d'au moins un acide carboxylique éthyléniquement insaturé, choisi parmi l'acide acrylique, méthacrylique, maléique et itaconique.

**8.** Utilisation selon l'une quelconque des revendications précédentes, où les dispersions polymères présentent un pH dans la plage de 6,7 à 8,0.

**9.** Utilisation selon la revendication 8, où le pH est réglé par addition d'au moins une base, choisie parmi les hydroxydes de métal alcalin et alcalino-terreux.

**10.** Utilisation de poudres ou de granulats polymères, pouvant être obtenu(e)s par l'élimination d'au moins 80% en poids des constituants volatils d'une dispersion polymère selon l'une quelconque des revendications 1 à 9 comme additif pour des matériaux de construction minéraux à base de liants hydrauliques.

**11.** Utilisation selon l'une quelconque des revendications précédentes, où le copolymère est utilisé en une quantité de 5 à 250% en poids, par rapport au poids sec du liant hydraulique.

**12.** Utilisation selon l'une quelconque des revendications, où le liant hydraulique est le ciment.

**13.** Matériaux de construction minéraux à base de liants hydrauliques, contenant, par rapport au poids sec de la proportion minérale, 0,5 à 150% en poids d'au moins un copolymère sous forme d'une dispersion polymère aqueuse selon l'une quelconque des revendications 1 à 9 et/ou d'une poudre ou d'un granulat polymère selon la revendication 10.

**14.** Procédé pour améliorer la résistance mécanique, l'élasticité et l'aptitude à la transformation de matériaux de construction à base de liants hydrauliques, où on mélange les uns avec les autres

- au moins un liant hydraulique,
- au moins une dispersion polymère aqueuse selon l'une quelconque des revendications 1 à 9 et/ou une poudre ou un granulat polymère selon la revendication 10 ainsi que, le cas échéant,
- de l'eau et/ou des additifs.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 537411 A
- JP 59146963 B
- AT 359904
- JP 63055143 B
- JP 645935 A
- JP 63156048 B
- JP 01005935 A
- EP 555959 A
- EP 308753 A
- EP 654454 A
- DE 19729161
- US 4269749 A
- EP 126699 A
- EP 567881 A
- EP 567819 A
- DE 3147008 A
- DE 4213967 A
- EP 402319 A
- EP 306449 A
- US 3952805 A
- DE 3716974 A
- EP 338293 A
- DE 3925306 A
- US 4586960 A
- US 4042407 A
- US 4906298 A
- EP 97613 A
- DE 4420444 A
- EP 619277 A
- DE 4304109 A
- EP 610699 A
- EP 501272 A
- EP 35332 A


### In der Beschreibung aufgeführte Nicht-Patentliteratur


- Encyclopedia of Polymer Science and Technology. Wiley & Sons Inc, 1966, vol. 5, 847
- **HOUBEN-WEYL.** Methoden der organischen Chemie, Band XIV/1, Makromolekulare Stoffe. Georg-Thieme-Verlag, 1961, vol. XIV-1, 411-420
- **HOUBEN-WEYL.** Methoden der organischen Chemie, Band XIV/1, Makromolekulare Stoffe. Georg-Thieme-Verlag, 1961, vol. XIV-1, 192-208
- Ullmann's Encyclopedia of Industrial Chemistry. VCH, 1992, vol. A 21, 169
- **ZOSEL.** *Farbe und Lack,* 1976, vol. 82, 125-134
- **T.G. FOX.** *Bull. Am. Phys. Soc.,* 1956, vol. 1, 123
- Ullmanns Enzyklopädie der technischen Chemie. 1980, 17-18
- **J. BRANDRUP ; E.H. IMMERGUT.** Polymer Handbook. J. Wiley, 1989
- **H. REUL.** Handbuch der Bauchemie. Verlag für chemische Industrie H. Ziolkowsky KG, 1991
- Ullmanns Enzyklopädie der technischen Chemie. 1951, vol. 1, 693-727
- **L. CHANDER.** *Paint & Resin,* 1981, vol. 9/10, 24-25